# EUROPEAN PATENT APPLICATION

(11) **EP 2 757 413 A1**
(43) Date of publication of application: **23.07.2014**
(21) Application number: 12831574.4
(22) Date of filing: 13.09.2012
(51) Int. Cl.: G02F 1/15

(54) **REFLECTIVE DIMMING ELECTROCHROMIC ELEMENT INSERTED WITH NON-WATER BASED HYDROGEN ION CONDUCTIVE ELECTROLYTE LAYER, AND DIMMING ELEMENT USING SAID REFLECTIVE DIMMING ELECTROCHROMIC ELEMENT**

(30) Priority: 16.09.2011 JP 2011203811
(71) Applicant: National Institute of Advanced Industrial Science and Technology, Tokyo 100-8921 (JP)
(72) Inventor: TAJIMA Kazuki, Nagoya-shi Aichi 463-8560 (JP); YOSHIMURA Kazuki, Nagoya-shi Aichi 463-8560 (JP); YAMADA Yasusei, Nagoya-shi Aichi 463-8560 (JP)
(74) Representative: Calamita, Roberto
(86) International application number: PCT/JP2012/073520
(87) International publication number: WO 2013/039173

(57) **Abstract**

In a reflective dimming element having a multilayer film formed in a transparent base material, the multilayer film has a structure including a transparent base material 10 having a transparent electrode layer 20 and an ion storage layer 30 sequentially formed thereon; a transparent base material 70 having a transparent electrode layer 60, a reflective dimming layer 50 and a catalyst layer 40, or a reflective dimming layer 50 and a catalyst layer 40, sequentially formed thereon; and a non-water-based hydrogen ion conductive electrolyte layer 90 interposed between the ion storage layer 30 and the catalyst layer 40, while the electrolyte layer 90 is formed from a non-water-based hydrogen ion conductive electrolyte solution containing an ion conductive polymer and has high hydrogen ion conductivity and high light transmission performance. There are provided a reflective dimming electrochromic element which enables switching by low-voltage driving in a short time over a wide range, and a dimming member using the element.

## Description

### TECHNICAL FIELD

The present invention relates to a reflective dimming electrochromic element which can electrically control the transmission of light by electrically switching a glass surface or a resin surface from a mirror state to a transmissive state in a reversible manner, and a dimming member using the same.

### BACKGROUND ART

Generally, window glass of a building serves as large outlets and inlets of heat. For example, at the time of heating the inside of a building in winter, the proportion of heat carried away through the window is as much as about 48%, and at the time of cooling the inside of a building in summer, the proportion of heat coming in through the window reaches about 71 %. The same phenomenon also applies to vehicles for transport such as automobiles, in which window glass serves as large outlets and inlets of heat. In an automobile, the ratio of window glass to the space is larger than the ratio thereof in a building structure, and there is less room for the people inside an automobile to avoid sunlight. Hence, the temperature of the interior of the automobile in an environment under hot weather rises very high.

In an example of measurement conducted in a summer environment in Japan, the air temperature inside a parked automobile reaches close to about 70°C. In regard to the temperature of the interior materials inside the automobile, the temperature at the upper surface of an instrument panel rises to near 100°C, and the temperature at the ceiling rises to near 70°C. It is needless to mention about the unpleasantness when passengers ride in such circumstances. Also, even if ventilation or a cooling apparatus is used, the temperature of the interior materials is not easily lowered, and radiant heat is continuously radiated to the passengers over a long time, so that the comfortable feeling in the vehicle is greatly decreased.

Regarding a technology for solving these problems, dimming glass that can control the incoming and outgoing of light and heat has been developed. There are several kinds of dimming modes used with this dimming glass, and examples of an element using a dimming element include: 1) an electrochromic element which uses a material whose transmittance is reversibly changed by application of a current or a voltage; 2) a thermochromic element using a material whose transmittance changes with temperature; and 3) a gasochromic element which uses a material whose transmittance is changed by controlling the atmosphere gas.

Among them, an electrochromic element can control the state of transmission of light and heat electrically. Therefore, an electrochromic element can have the state of transmission of light and heat set to a state intended by a human, and is very suitable as a dimming material that is applied to the glass for buildings or vehicles. Furthermore, since an electrochromic element can maintain its optical characteristics in a certain state even when a current or a voltage is not applied, the energy used can be reduced.

There are some electrochromic elements in which a part of the constituents is in the liquid state; however, in that case, it is necessary to prevent leakage of the liquid material. Buildings and vehicles are assumed to be used for a long time, and although it is possible to prevent the leakage for a long time period, an increase in the cost is brought about. Therefore, in an electrochromic element suitable for the glass for buildings or vehicles, it is desirable that all the materials constituting the electrochromic element be solid.

Conventionally known electrochromic elements using solid materials including tungsten oxide work based on the principle that dimming is achieved as a dimming material absorbs light. That is, penetration of heat in the form of light to the interior is suppressed by absorption of light. Accordingly, when a dimming material based on such a dimming principle is employed, there is a problem that the dimming material holds heat as a result of the absorption of light, the heat is re-radiated to the interior as radiant heat, and heat penetrates into the interior of the dimming glass.

As a means for solving this problem, a technique of performing dimming not by absorbing light but by reflecting light, can be contemplated. That is, penetration of heat to the interior as a result of heat absorption of a dimming material can be prevented by using a reflective dimming material which reversibly switches between a mirror state and a transparent state.

Regarding a reflective type dimming electrochromic element having such characteristics, there has been disclosed, for example, an electrochromic element in which a reflective dimming layer formed from an alloy of a rare earth metal and magnesium and a hydride thereof, a transparent oxidation protective layer having hydrogen ion conductivity, an anhydrous solid electrolyte layer, and an ion storage layer are laminated (see, for example, Patent Literature 1).

The reflective dimming layer has a function of controlling the reflectance of the electrochromic element, and the reflectance is changed by giving and receiving of hydrogen ions. The oxidation protective layer is formed from, for example, compounds having hydrogen ion conductivity including oxides such as niobium oxide, vanadium oxide, and tantalum oxide; and fluorides such as magnesium fluoride and lead fluoride, and thus prevents oxidation of the reflective dimming layer.

The ion storage layer accumulates hydrogen ions that are used for the control of reflectance. When a voltage is applied to dimming glass, hydrogen ions migrate from the ion storage layer to the reflective dimming layer through the solid electrolyte layer and the oxidation protective layer, and thus the reflectance of the reflective dimming layer is changed. When a voltage of opposite polarity is applied, hydrogen ions are released from the reflective dimming layer, and the reflectance of the reflective dimming layer gains the original value. However, since this element uses highly expensive rare earth metals in the reflective dimming layer, application to an element with a large surface area is inadequate from the viewpoint of cost.

Regarding a reflective dimming element using a less expensive and more practical material in the reflective dimming layer, there has been suggested, for example, an element in which Mg₂Ni is laminated as a reflective dimming layer, and palladium or platinum is laminated as a catalyst layer (see, for example, Patent Literature 2). However, this kind of material has low transmittance at the time of being transparent, and cannot be used for practical uses.

A reflective dimming layer formed from a magnesium-nickel-based alloy thin film (see, for example, Patent Literature 3), for which the inventors of the present invention have participated in the development of the dimming member, is one utilizing the gasochromic system using hydrogen gas, but has a visible light transmittance is about 50%, which is a value remarkably increased compared with 20% of Mg₂Ni as conventionally reported. Thus, this reflective dimming layer has come close to the stage of practical use. Regarding an all-solid type dimming mirror element using this magnesium-nickel-based alloy thin film, there has been suggested, for example, an all-solid type dimming mirror light switch in which an ion storage layer, a solid electrolyte layer, and a reflective dimming layer formed from a magnesium-nickel-based alloy as a reflective dimming element are laminated on a transparent substrate (see, for example, Patent Literature 4).

Furthermore, an all-solid type dimming mirror light switch using a magnesium-nickel-based alloy thin film as a reflective dimming layer exhibits a tinge of light yellow in the transmissive state, and does not come to a perfectly colorless transparent state. From the viewpoint of transmissibility in the transmissive state of this element, the inventors of the present invention are also carrying out the development of an all-solid type dimming mirror light switch which uses a magnesium-titanium-based alloy thin film or a magnesium-niobium-based alloy thin film and exhibits an almost colorless transparent state at the time of being in the transmissive state (see, for example, Patent Literatures 5 and 6).

Furthermore, in regard to the frequency of repeated use, this element can achieve switching for 1000 times or more, but there have been occasions in which deterioration occurs, and the element does not revert to the reflective state. As one of the causes of this deterioration, it has been suggested that every time the switching is repeated, the reflective dimming layer components and the catalyst layer components diffuse into the solid electrolyte layer (see, for example, Non Patent Literature 1).

Also, for the purpose of preventing the diffusion of constituent components between all-solid type reflective dimming electrochromic elements using a magnesium-based alloy thin film, an all-solid type dimming mirror light switch which exhibits a high switching frequency by using an aluminum thin film as a buffer layer, has also been proposed (see, for example, Patent Literature 7).

The reflective dimming layer at the surface of this element has a thin oxide layer of magnesium formed on the surface thereof due to the contact with air immediately after production, and it has been believed that this oxide layer functions as a passivation layer. However, when this element was retained in air for a long time, which was carried out as an example of an environmental test, a phenomenon in which this element loses dimming characteristics has been found. Therefore, the inventors conducted a more thorough investigation on the deterioration mechanism of the element.

As a result, the surface magnesium oxide layer functioned insufficiently as a passivation layer, and rapid deterioration was observed in a high humidity atmosphere. As one of the causes for this observation, it has been suggested that the reflective dimming layer undergoes oxidation and hydroxylation due to oxygen and humidity in the atmosphere, and thereby causes the rapid deterioration (see, for example, Non Patent Literature 2). For the purpose of mitigating this environmental deterioration, an all-solid type reflective dimming electrochromic element acquiring high durability as a result of introducing a protective layer at the surface, has also be proposed (see Patent Literature 8).

Furthermore, for the use as a dimming window material, there is a concern for the risk of glare caused by direct reflection of sunlight by the reflective dimming layer, or the influence on plants in the surroundings. For that reason, there has also been proposed an all-solid type reflective dimming electrochromic element by which the total light transmittance in the transparent state of the element and the total light reflectance in the mirror state can be arbitrarily regulated in accordance with the place of use, purpose or the like, due to the interference effect caused by a layer formed at the top of the element (see Patent Literature 9).

Reflective dimming electrochromic elements that electrically perform switching include all-solid type elements using a solid thin film material as the electrolyte, and solution type elements using an electrolyte solution. Since the production of the elements using a solid thin film material as the electrolyte employs a method of forming multilayer films sequentially on one sheet of a transparent base material, the process takes a very long time when large-sized products are produced, and hence, there has been a problem that productivity is decreased while the cost increases. Also, in the case of the solution type elements, the process can be shortened; however, since the reflective dimming layer and the catalyst layer are weak against acid, it is essential to use a basic electrolyte solution, and there has been a problem that when a common aqueous solution system of potassium hydroxide or sodium hydroxide is used, the reflective dimming layer and the catalyst layer dissolve out. Therefore, for the size extension of the element, simplification of the process, and cost reduction, characteristics that prevent dissolution of the reflective dimming layer and the catalyst layer caused by the influence of the electrolyte solution, and allow only hydrogen ions as a cation to go in and out to the reflective dimming layer and the catalyst layer are desired. Furthermore, depending on the use, there has also been a demand for a structure which has no leakage of the electrolyte solution.

### CITATION LIST

### PATENT LITERATURE

PATENT LITERATURE 1: JP 2000-204862 A
PATENT LITERATURE 2: US PATENT NO. 6647166
PATENT LITERATURE 3: JP 2003-335553 A
PATENT LITERATURE 4: JP 2005-274630 A
PATENT LITERATURE 5: JP 2008-152070 A
PATENT LITERATURE 6: JP 2008-152071 A
PATENT LITERATURE 7: JP 2009-025785 A
PATENT LITERATURE 8: JAPANESE PATENT APPLICATION NO. 2010-285168
PATENT LITERATURE 9: JAPANESE PATENT APPLICATION NO. 2011-086732

### NON PATENT LITERATURE

NON PATENT LITERATURE 1: K. Tajima, Y. Yamada, S. Bao, M. Okada and K. Yoshimura, "Durability of All-Solid-State Switchable Mirror Based on Magnesium-Nickel Thin Film", Electrochemical Solid State Letters, Vol. 10, No. 3, pp. J52-54, 2007
NON PATENT LITERATURE 2: K. Tajima, Y. Yamada, S. Bao, M. Okada and K. Yoshimura, "Analysis of Degradation of Flexible All-Solid-State Switchable Mirror Based on Mg-Ni Thin Film", Japanese Journal of Applied Physics, Vol. 48, No.10, pp. 102402-1-102402-5, 2009

### SUMMARY OF INVENTION

### TECHNICAL PROBLEM

The present invention has been accomplished under such circumstances as described above, and it is an object of the present invention to provide a reflective dimming electrochromic element which enables switching in a short time over a wide range using a reflective dimming layer having high transmittance at the time of being transparent, and a dimming member using the same.

### SOLUTION TO PROBLEM

Under such circumstances of the related art, the inventors of the present invention conducted extensive and intensive studies, aiming to develop a reflective dimming electrochromic element which can fundamentally solve the above-described various problems. As a result, for example, with regard to a reflective dimming electrochromic element using a thin film of a magnesium-based alloy or the like, the inventors formed a multilayer film on each of two sheets of transparent base materials and interposed a non-water-based hydrogen ion conductive electrolyte layer between the layers, and thereby, the inventors succeeded in developing a structure which contributes to size extension, process simplification and cost reduction. Thus, the inventors completed the present invention.

Specifically, the present invention is characterized by the followings.

First, a reflective type dimming electrochromic element has a multilayer film formed on a transparent base material, and the element having a multilayer integrated structure includes: at least a transparent base material having a transparent electrode layer and an ion storage layer sequentially formed thereon; a transparent base material having a transparent electrode layer, a reflective dimming layer and a catalyst layer, or a reflective dimming layer and a catalyst layer, sequentially formed thereon; and a non-water-based hydrogen ion conductive electrolyte layer interposed between the ion storage layer and the catalyst layer.

Second, in the reflective type dimming electrochromic element described above, the non-water-based hydrogen ion conductive electrolyte layer is formed from a non-water-based hydrogen ion conductive electrolyte solution, and the hydrogen ion concentration index (pH) of the electrolyte solution is adjusted to be higher than 7.

Third, the non-water-based hydrogen ion conductive electrolyte layer is formed from a non-water-based hydrogen ion conductive electrolyte solution, and the electrolyte solution includes an ion conductive polymer and an organic solvent, or an ion conductive polymer, an organic solvent and an additive exhibiting dispersibility and adhesiveness.

Fourth, the ion conductive polymer includes any one or more of polyethyleneimine, polyacrylic acid, polyethylene glycol, polypropylene glycol, tetrabutylammonium perchlorate, tetrabutylammonium borofluoride, ammonium persulfate, and a perfluorosulfonic acid-based resin ammonium persulfate.

Fifth, the organic solvent includes any one or more of tetrahydrofuran, propylene carbonate, ethylene carbonate, diethyl carbonate, dimethyl carbonate, ethanol, acetone, propanol, γ-butyrolactone, 1-methyl-2-pyrrolidone, 1,3-dioxolane, toluene, cyclohexane, 1-methoxy-2-propanol, tetrahydrofurfuryl alcohol, 2-methoxymethanol, and α-terpineol.

Sixth, the additive includes any one or more of polyvinyl butyral, polyvinylpyrrolidone, polytetrafluoroethylene, polyvinylidene fluoride, polymethyl methacrylate, polyvinyl chloride, polyethylene, 12-hydroxystearic acid, lauroylglutamic acid dibutylamide, dibenzylidene sorbitol, polysilane, an ethylene-vinyl acetate copolymer resin, ethyl cellulose, and triisopropanolamine.

Seventh, the transparent electrode layer includes at least one of a metal, an oxide or an organic compound.

In the reflective type dimming electrochromic element described above, the transparent base material is glass or a resin sheet.

Ninth, the ion storage layer formed on the transparent electrode layer includes a transition metal oxide.

Tenth, the reflective dimming layer includes magnesium, or an alloy obtained by adding any one or more of nickel, titanium, niobium, zirconium, calcium and strontium to magnesium.

Eleventh, the catalyst layer formed on the reflective dimming layer includes palladium, platinum, silver, or an alloy thereof.

Twelfth, any one of the ion storage layer and the reflective dimming layer is hydrogenated, and/or hydrogen ions are incorporated into at least the non-water-based hydrogen ion conductive electrolyte layer.

Thirteenth, a method for producing a reflective type dimming electrochromic element having a multilayer film formed on a transparent base material includes: at least forming a transparent electrode layer and an ion storage layer on a first transparent base material, and at the same time, forming a transparent electrode layer, a reflective dimming layer and a catalyst layer, or a reflective dimming layer and a catalyst layer on a second transparent base material; and interposing a non-water-based hydrogen ion conductive electrolyte layer between the ion storage layer and the catalyst layer, to subject the element to multilayer integration.

Fourteenth, a dimming member includes the reflective dimming electrochromic element according to any one of the first to twelfth aspects described above incorporated therein.

### ADVANTAGEOUS EFFECTS OF THE INVENTION

According to the present invention a reflective dimming electrochromic element having excellent reflective dimming characteristics can be provided.

Furthermore, in the present invention, when a non-water-based hydrogen ion conductive electrolyte solution to which additives for exhibiting dispersibility and adhesiveness have been added is used, two sheets of transparent base materials can be laminated by the effect of adhesiveness of the solution, and a structure with multilayer films packaged therein is adopted. Therefore, the element of the invention also has convenience and handleability.

In the method used hitherto for forming a multilayer film sequentially on one sheet of a transparent base material, for the production of a transparent electrode layer that is formed on the reflective dimming layer, a heating process is generally used for the purpose of improving conductivity of the transparent electrode layer; however, there has also been a problem that this heating damages the reflective dimming layer. However, since a process of producing a multilayer film on each of two sheets of transparent base materials can be selected by the present invention, formation of a reflective dimming layer is enabled after the formation of a transparent electrode, and the risk of damage to the reflective dimming layer by heating has also been addressed.

Furthermore, since the electrolyte layer has satisfactory hydrogen ion conductivity as the dimming characteristics, low voltage driving of the element is made possible, and a reflective dimming electrochromic element which works even under application of a voltage of ±1 V can be provided.

Furthermore, when a material system having adhesion solidification performance is selected as the non-water-based hydrogen ion conductive electrolyte solution, the element may be regarded as an all-solid type reflective dimming electrochromic element.

Here, an electrolyte solution means the mixing state of materials before the formation of the element, and the electrolyte layer represents the role as a functional layer after the element is constructed. Furthermore, adhesiveness of the solution used herein represents the characteristics by which the materials of the base material or the thin film can be attached, and in a broad sense, adhesion includes adsorption, tacky adhesion, melt adhesion, close adhesion, attachment and the like. Even if the solution is not solidified and maintains a semi-solid state or a semi-molten state, the solution may be regarded to have adhesiveness.

According to the present invention, when a voltage is applied, and/or a current flows between a transparent electrode layer and a transparent electrode layer of a reflective dimming electrochromic element, or between a reflective dimming layer and a transparent electrode layer, a reflective dimming action can be exhibited. Therefore, transmission of sunlight incident through window glass can be electrically controlled by electrically switching the glass surface reversibly from a mirror state to a transmissive state, and thus the interior space can be maintained in a pleasant condition.

Furthermore, when glass or a resin sheet is used for the transparent base material of a reflective dimming electrochromic element, and it is allowed to construct an element structure on the resin sheet, a large-sized reflective dimming electrochromic element having excellent productivity, convenience, economic efficiency and the like and having a large surface area can be provided.

According to the present invention, a large-sized reflective dimming electrochromic element having excellent productivity, convenience, economic efficiency and the like and having a large surface area can be produced by a high speed process in large quantities at low cost.

Furthermore, according to the present invention, since an energy saving effect can be obtained only by attaching a dimming member having a reflective dimming electrochromic element incorporated therein to existing window glass, the range of applications of the dimming member can be dramatically increased.

### BRIEF DESCRIPTION OF DRAWINGS

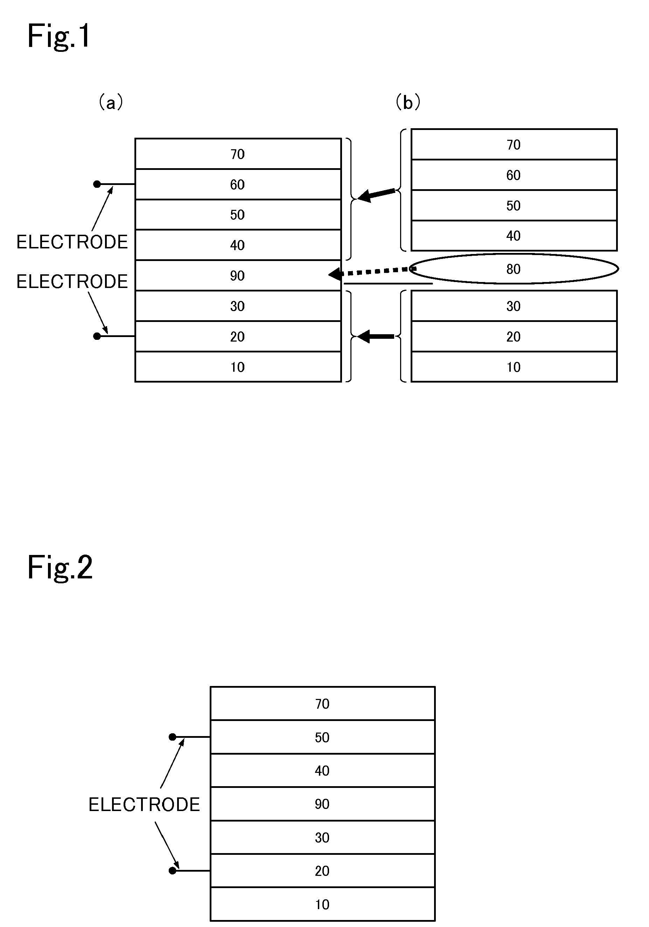

FIG. 1(a) and FIG. 1(b) are schematic diagrams illustrating an example of a reflective dimming electrochromic element of the present invention (diagram (a) illustrating the element structure, and diagram (b) showing a non-water-based hydrogen ion conductive electrolyte solution interposed between for the production of the element.
FIG. 2 is a schematic diagram illustrating another example of a reflective dimming electrochromic element of the present invention.

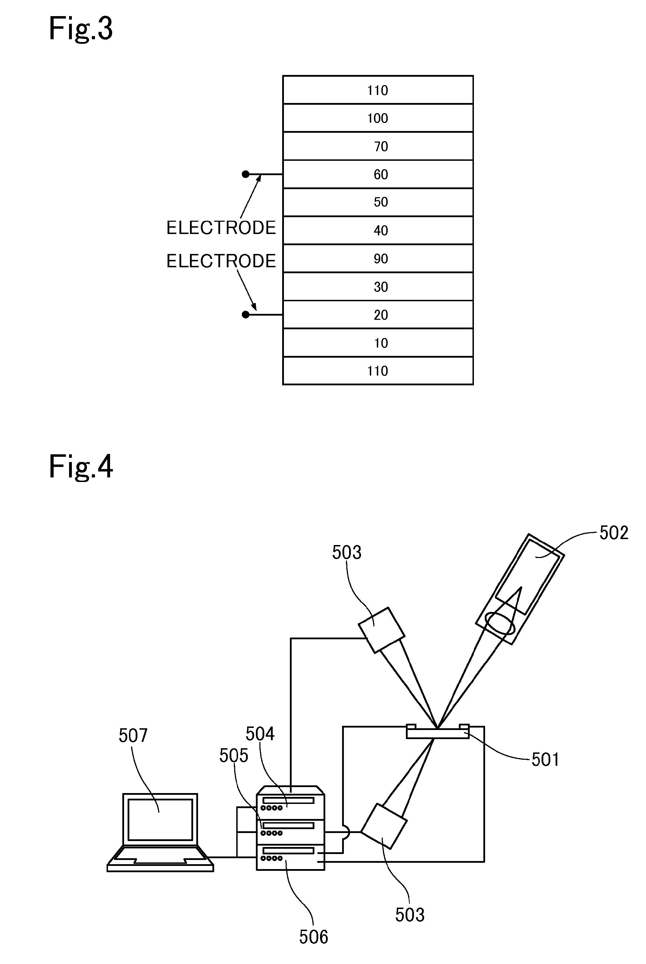

FIG. 3 is a schematic diagram illustrating another example of a reflective dimming electrochromic element of the present invention.
FIG. 4 is a schematic diagram of a characteristic evaluation apparatus for a reflective dimming electrochromic element.

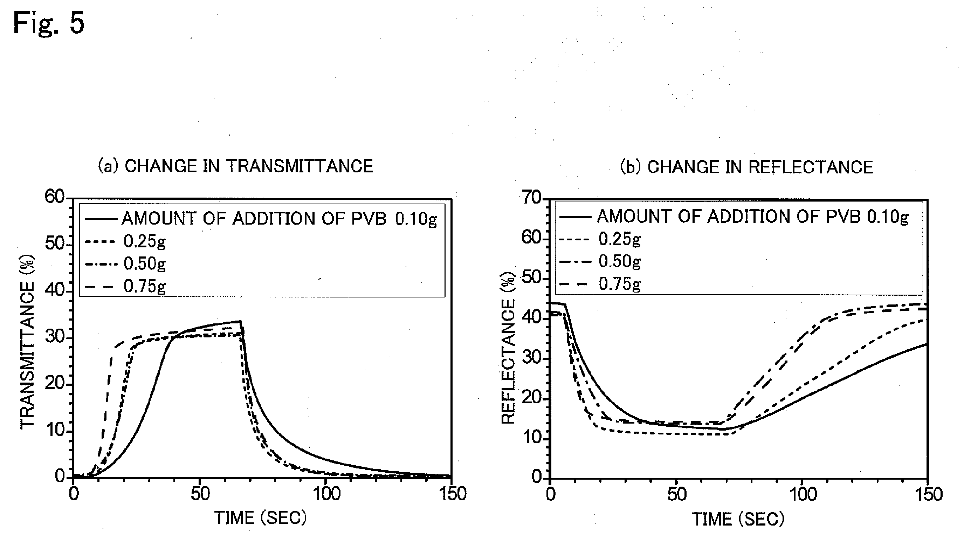

FIG. 5(a) and FIG. 5(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + anhydrous ethanol + polyvinyl butyral) interposed therebetween.

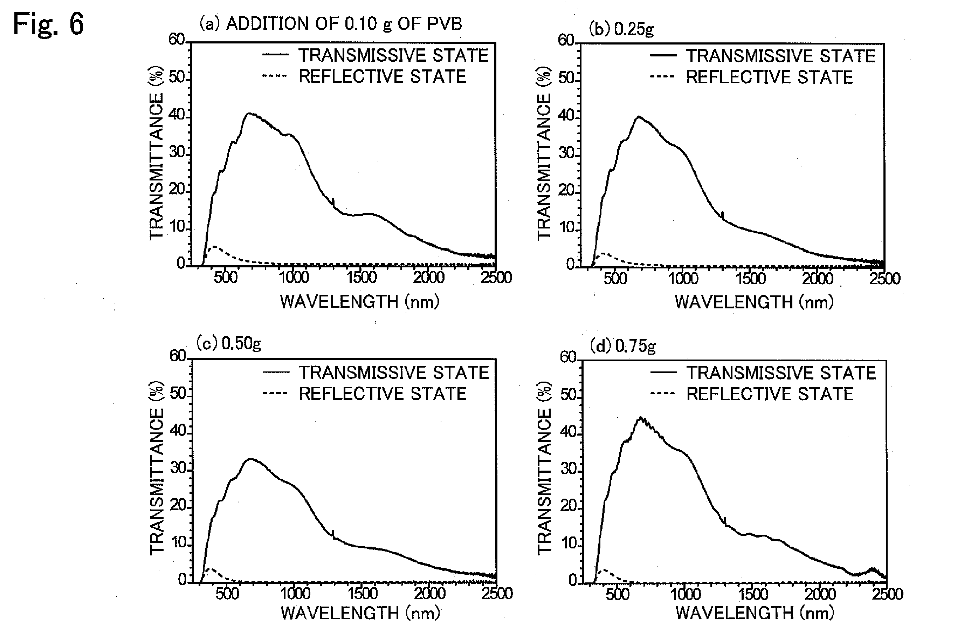

FIG. 6(a) to FIG. 6(d) are graphs showing the transmission spectrum of a magnesium-nickel-based reflective dimming electrochromic element having a non-water-based hydrogen ion conductive electrolyte layer (polyethyleneimine + anhydrous ethanol + polyvinyl butyral) interposed therebetween.

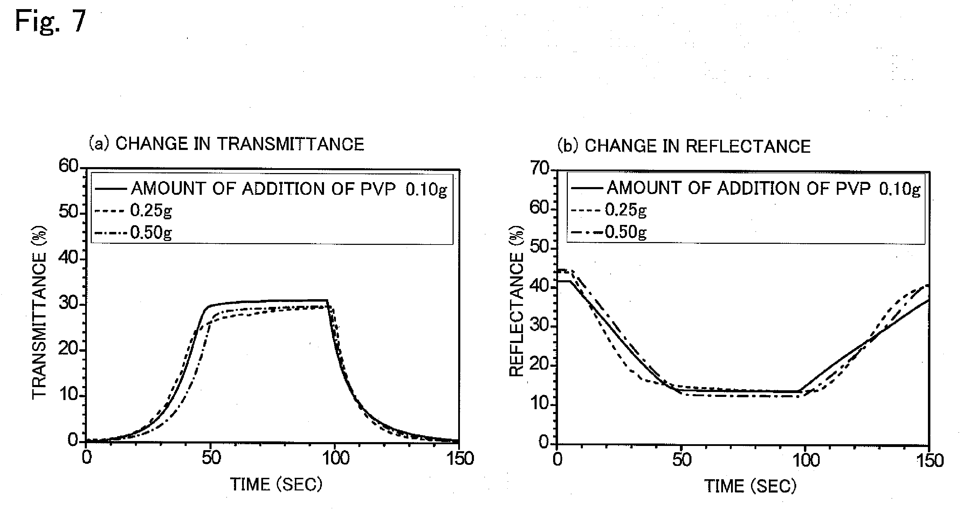

FIG. 7(a) and FIG. 7(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + γ-butyrolactone+ polyvinylpyrrolidone) interposed therebetween.

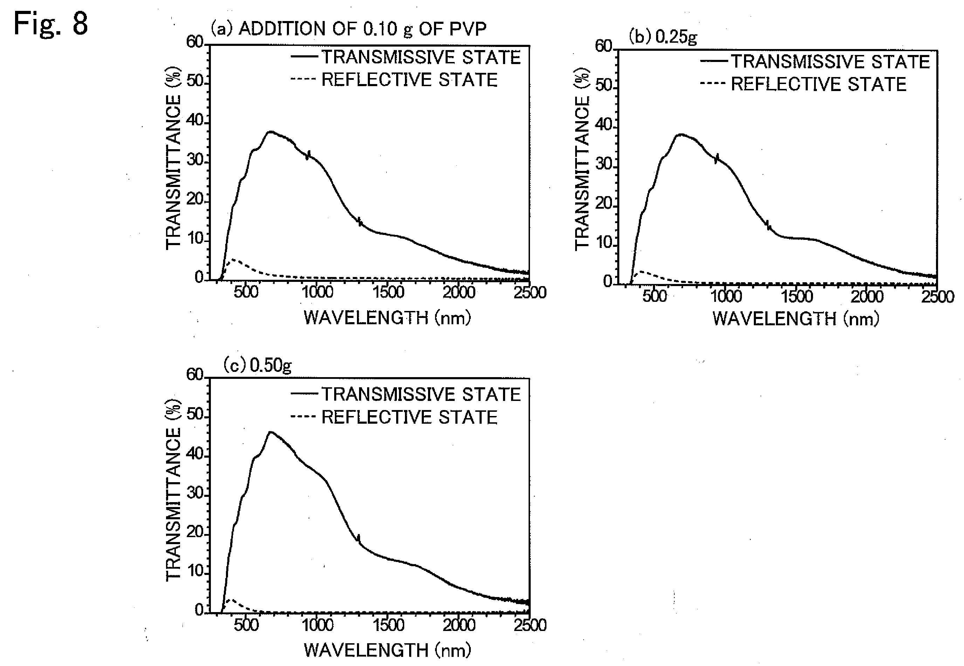

FIG. 8(a) to FIG. 8(c) are graphs showing the transmission spectrum of a magnesium-nickel-based reflective dimming electrochromic element having a non-water-based hydrogen ion conductive electrolyte layer (polyethyleneimine + γ-butyrolactone+ polyvinylpyrrolidone) interposed therebetween.

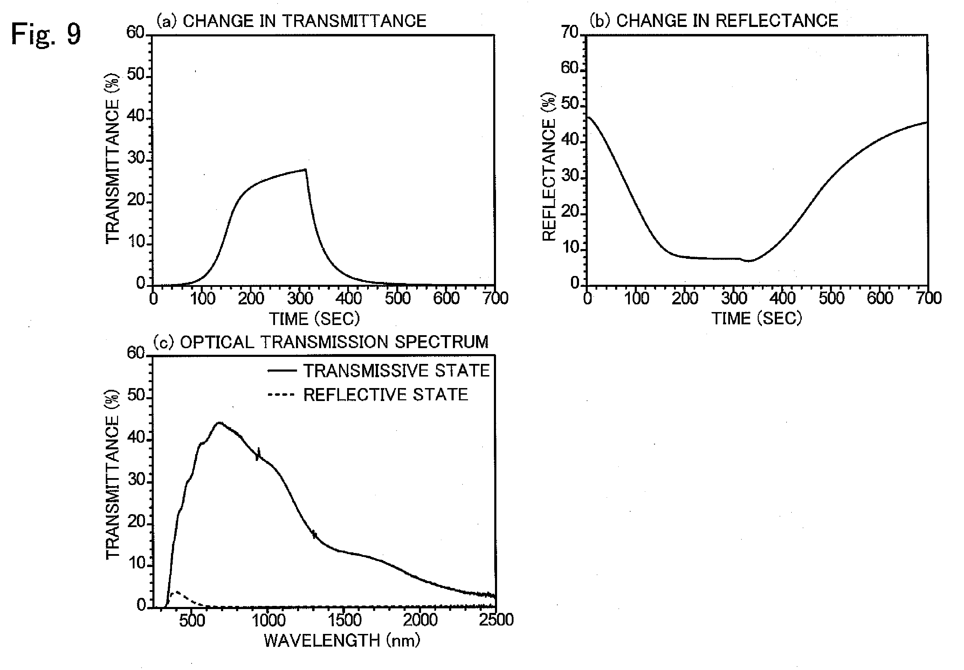

FIG. 9(a) to FIG. 9(c) are graphs showing the switching characteristics (changes over time in the optical transmittance and the optical reflectance at a wavelength of 670 nm) and the transmission spectrum of a magnesium-nickel-based reflective dimming electrochromic element having a non-water-based hydrogen ion conductive electrolyte layer (polyethyleneimine + propylene carbonate+ polyvinylpyrrolidone) interposed therebetween.

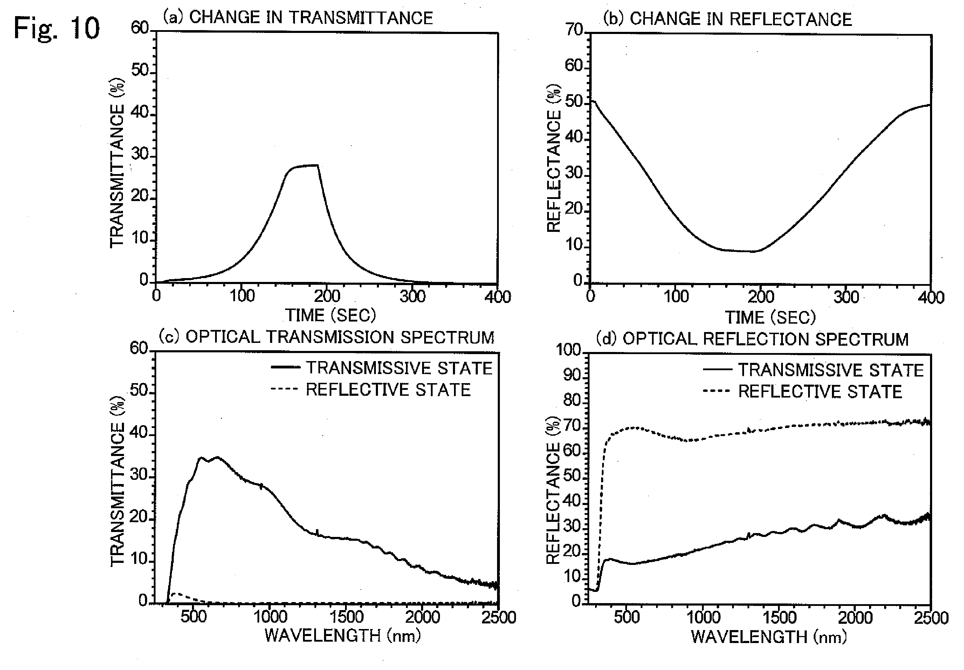

FIG. 10(a) to FIG. 10(d) are graphs showing the switching characteristics (changes over time in the optical transmittance and the optical reflectance at a wavelength of 670 nm), the transmission spectrum, and the reflection spectrum of a magnesium-nickel-based reflective dimming electrochromic element having a non-water-based hydrogen ion conductive electrolyte layer (polyethyleneimine + tetrahydrofuran + polysilane) interposed therebetween.

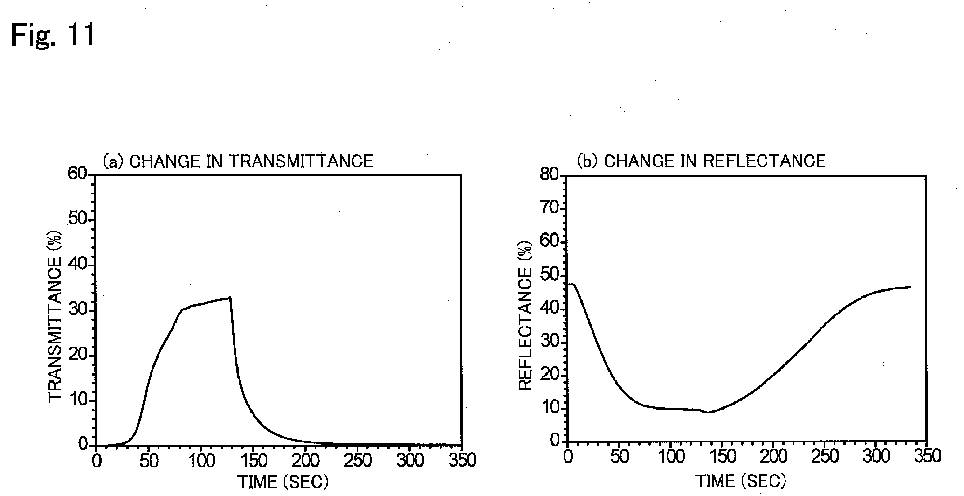

FIG. 11 (a) and FIG. 11(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + tetrahydrofuran + polyvinylidene fluoride) interposed therebetween.

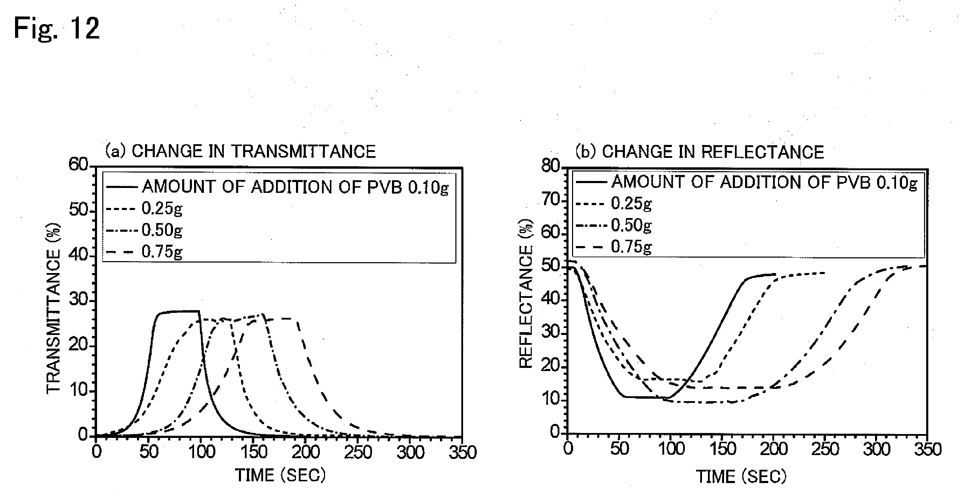

FIG. 12(a) and FIG. 12(b) are graphs showing the switching characteristics (changes over time in the optical transmittance and the optical reflectance at a wavelength of 670 nm) of a magnesium-titanium-based reflective dimming electrochromic element having a non-water-based hydrogen ion conductive electrolyte layer (polyethyleneimine + tetrahydrofuran + polyvinyl butyral) interposed therebetween.

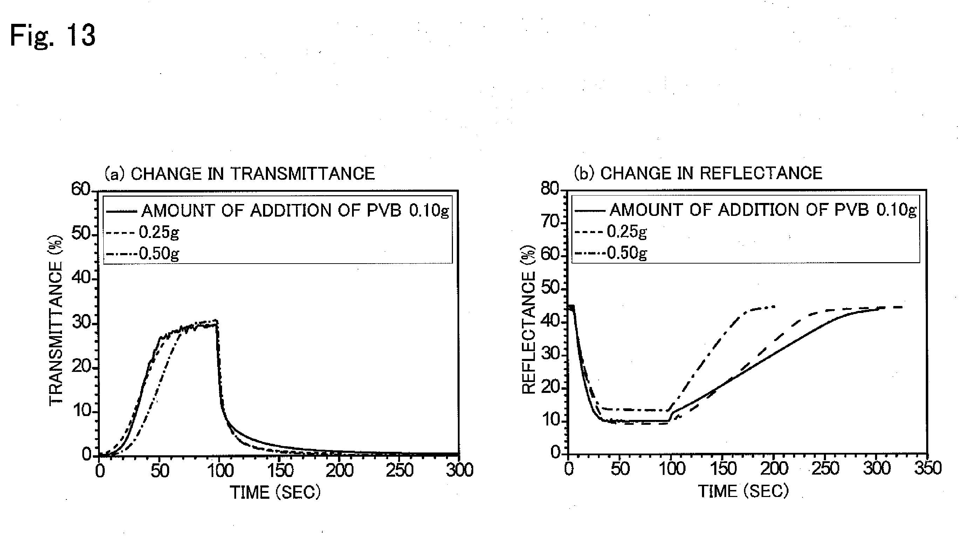

FIG. 13(a) and FIG. 13(b) are graphs showing the switching characteristics (changes over time in the optical transmittance and the optical reflectance at a wavelength of 670 nm) of a magnesium-titanium-based reflective dimming electrochromic element having a non-water-based hydrogen ion conductive electrolyte layer (polyethyleneimine + anhydrous ethanol + polyvinyl butyral) interposed therebetween.

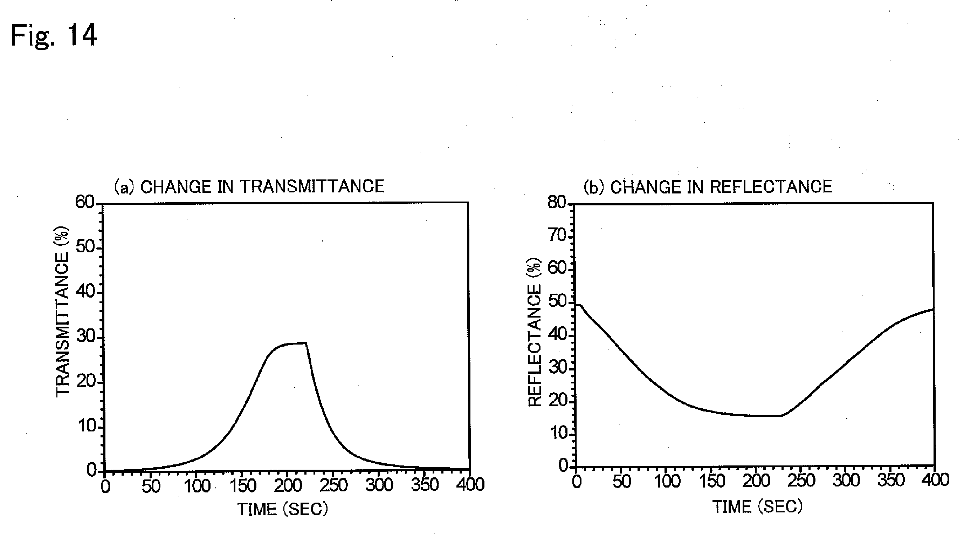

FIG. 14(a) and FIG. 14(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + tetrahydrofuran + polyvinyl butyral) interposed therebetween.

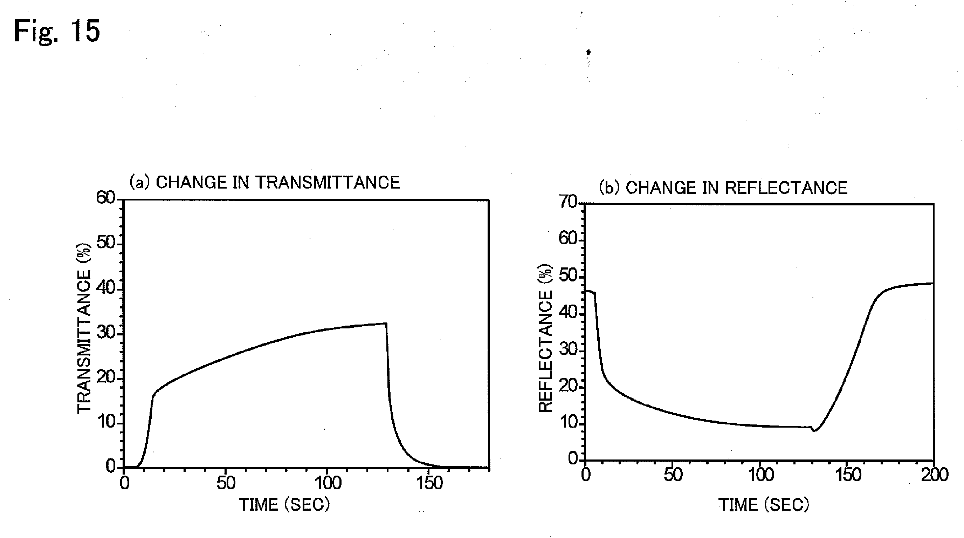

FIG. 15(a) and FIG. 15(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + tetrahydrofuran + propylene carbonate + 12-hydroxystearic acid) interposed therebetween.

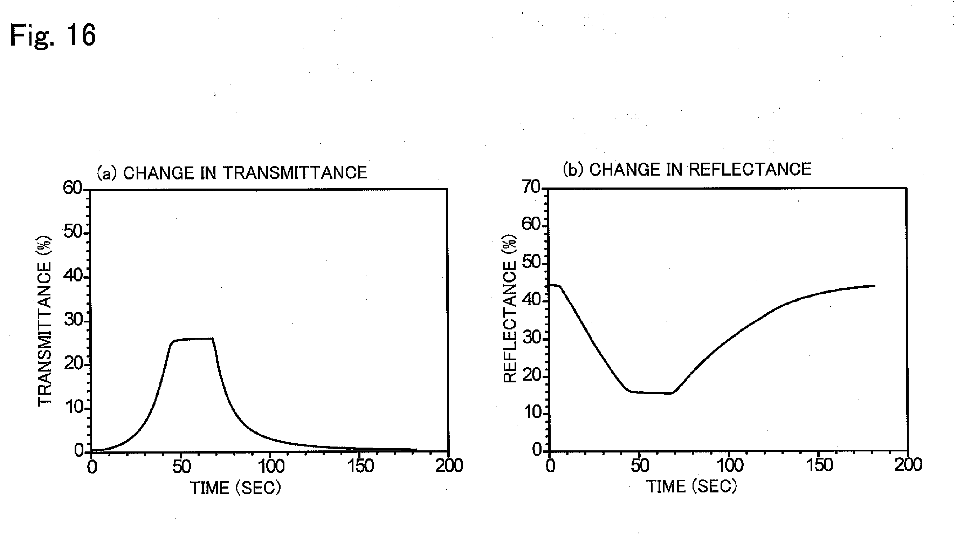

FIG. 16(a) and FIG. 16(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + 1,3-dioxolane + polyvinyl butyral) interposed therebetween.

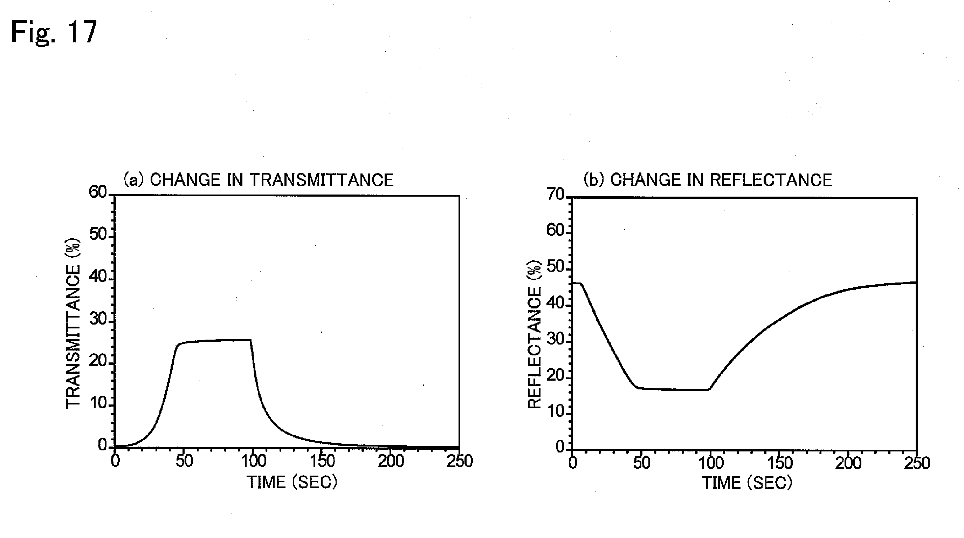

FIG. 17(a) and FIG. 17(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + tetrahydrofuran + dibenzylidene sorbitol) interposed therebetween.

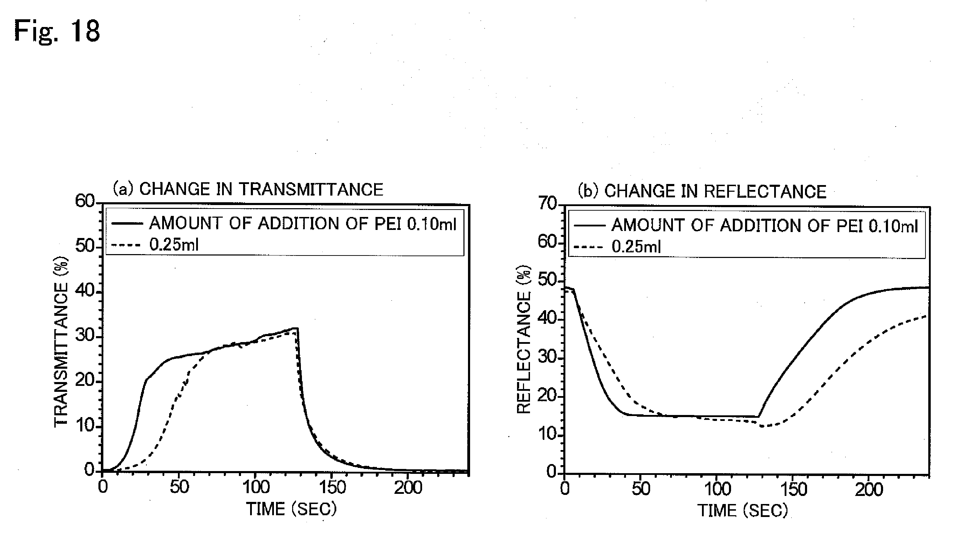

FIG. 18(a) and FIG. 18(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + tetrahydrofuran) interposed therebetween.

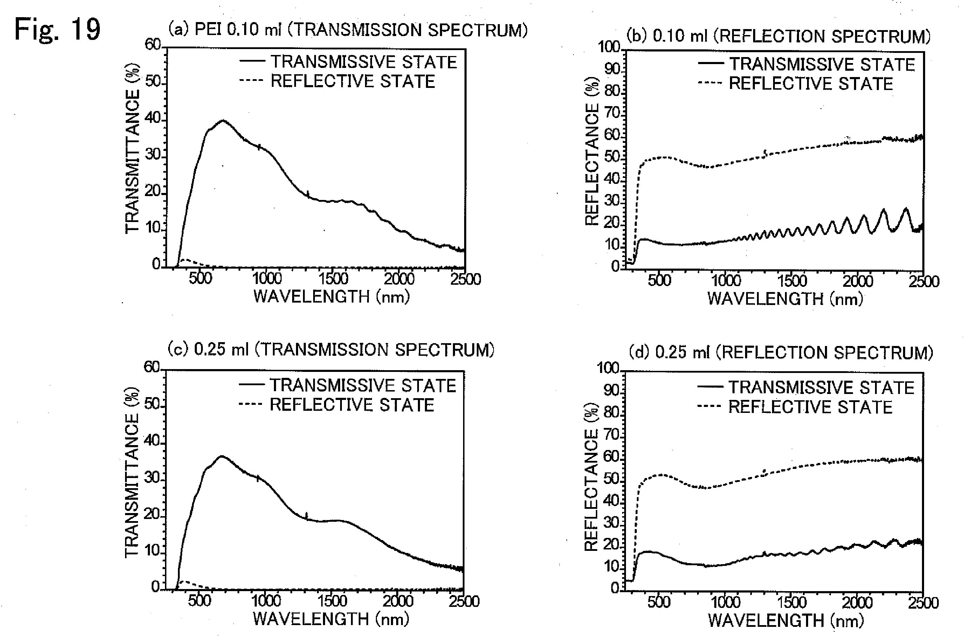

FIG. 19(a) to FIG. 19(d) are graphs showing the transmission spectrum and the reflection spectrum of a magnesium-nickel-based reflective dimming electrochromic element having a non-water-based hydrogen ion conductive electrolyte layer (polyethyleneimine + tetrahydrofuran) interposed therebetween.

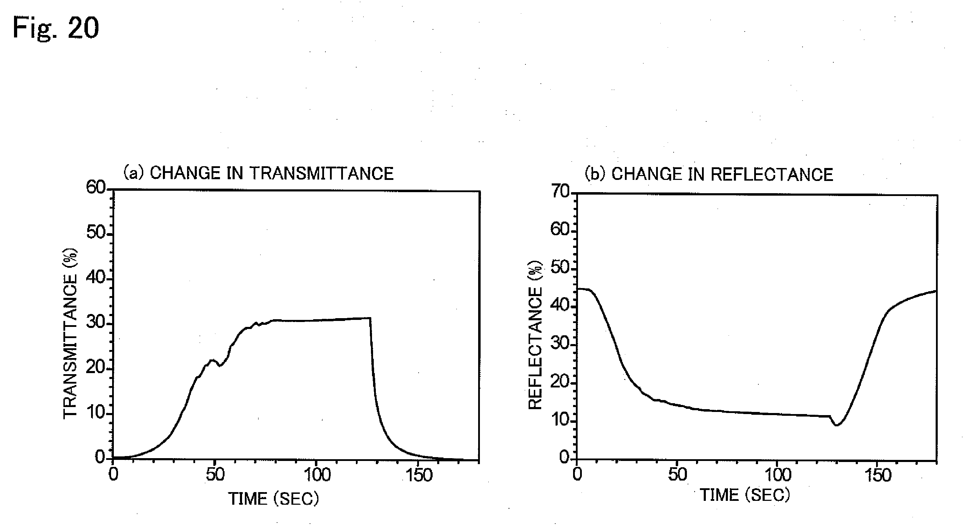

FIG. 20(a) and FIG. 20(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + propylene carbonate) interposed therebetween.

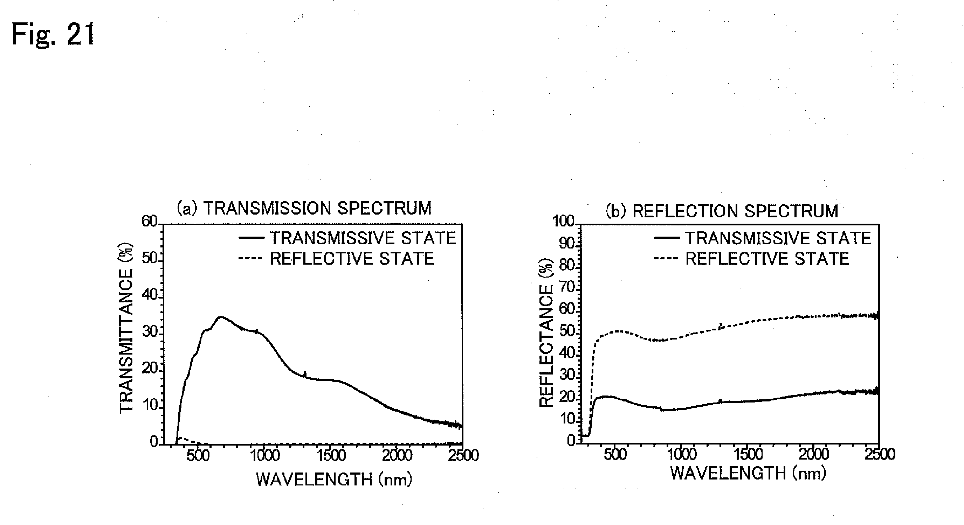

FIG. 21(a) and FIG. 21(b) are graphs showing the transmission spectrum and the reflection spectrum of a magnesium-nickel-based reflective dimming electrochromic element having a non-water-based hydrogen ion conductive electrolyte layer (polyethyleneimine + propylene carbonate) interposed therebetween.

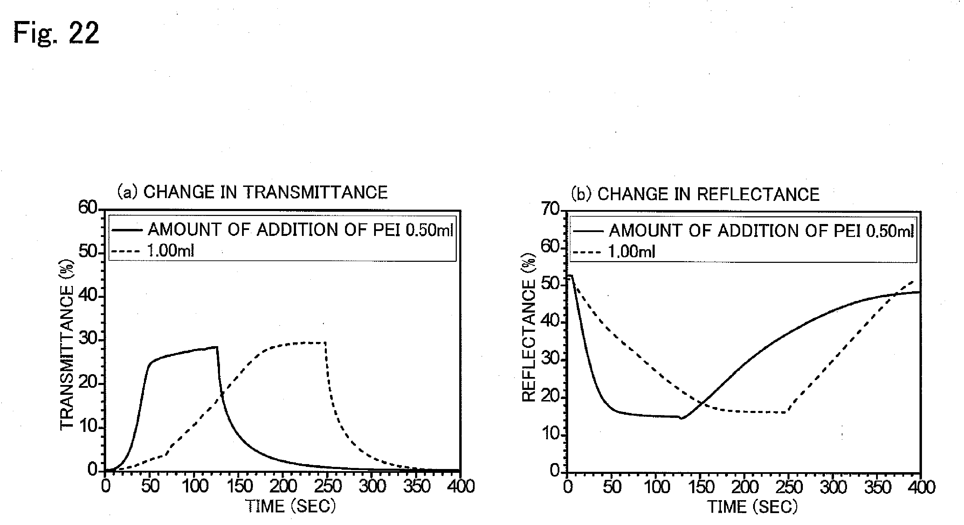

FIG. 22(a) and FIG. 22(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + propylene carbonate + ethylene carbonate) interposed therebetween.

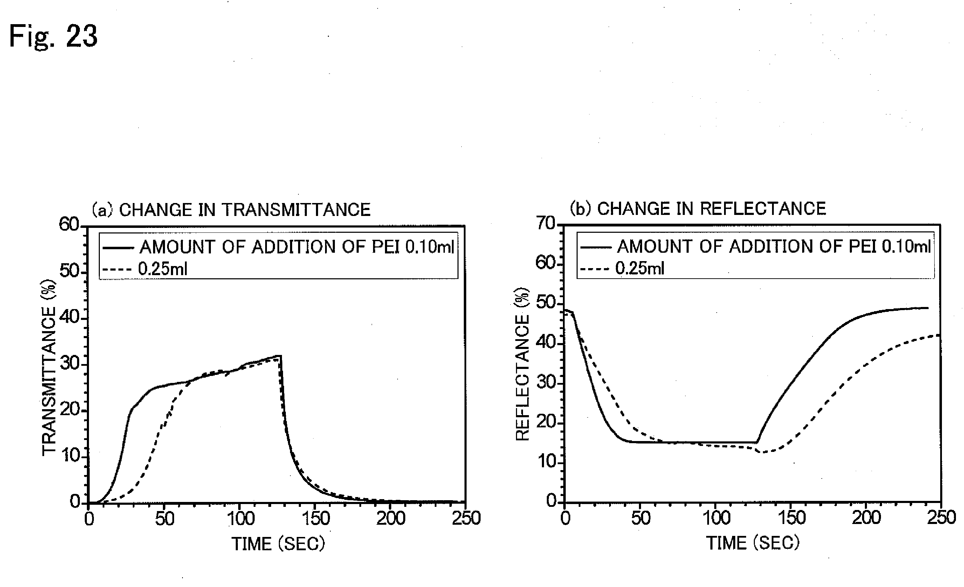

FIG. 23(a) and FIG. 23(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + γ-butyrolactone) interposed therebetween.

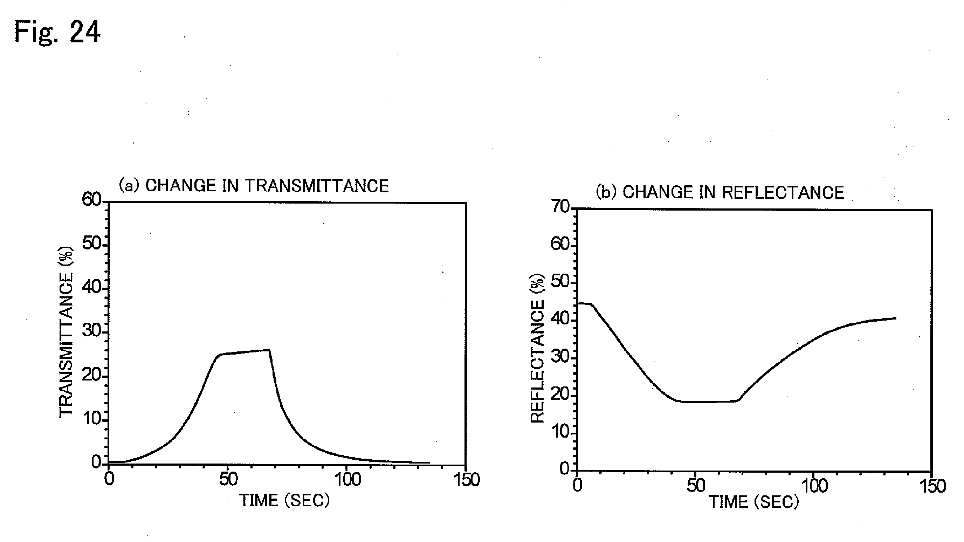

FIG. 24(a) and FIG. 24(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + 1,3-dioxolane) interposed therebetween.

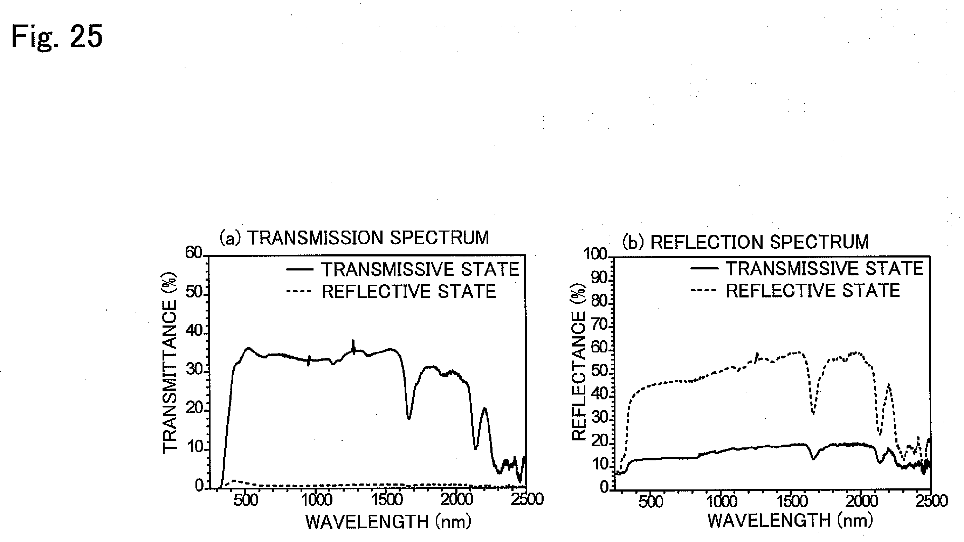

FIG. 25(a) and FIG. 25(b) are graphs showing the transmission spectrum and the reflection spectrum of a magnesium-nickel-based reflective dimming electrochromic element having a non-water-based hydrogen ion conductive electrolyte layer (polyethyleneimine + 1-methyl-2-pyrrolidone + polyvinyl butyral) interposed therebetween using a polycarbonate base material.

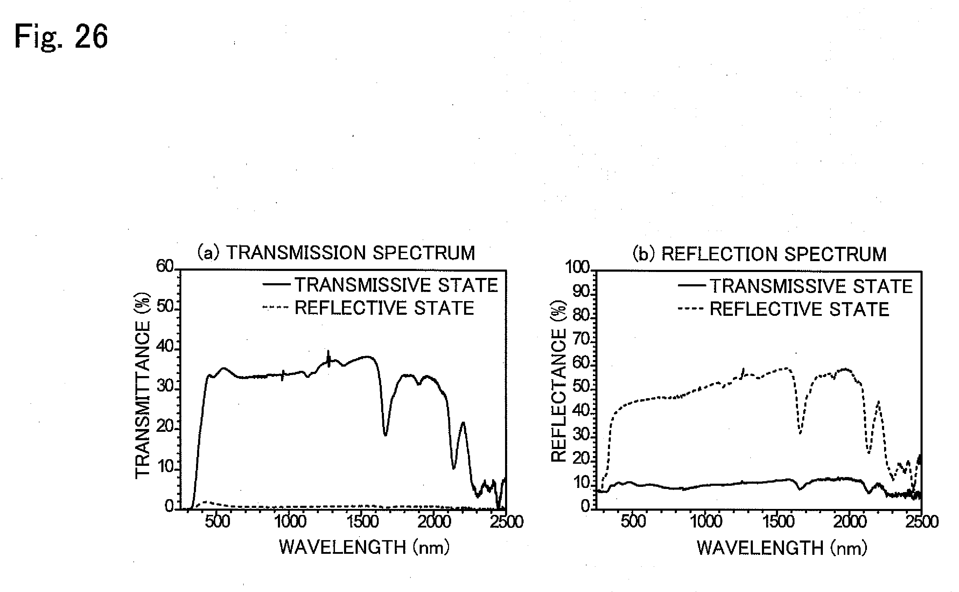

FIG. 26(a) and FIG. 26(b) are graphs showing the transmission spectrum and the reflection spectrum of a magnesium-nickel-based reflective dimming electrochromic element having a non-water-based hydrogen ion conductive electrolyte layer (polyethyleneimine + γ-butyrolactone+ polyvinyl butyral) interposed therebetween using a polycarbonate base material.

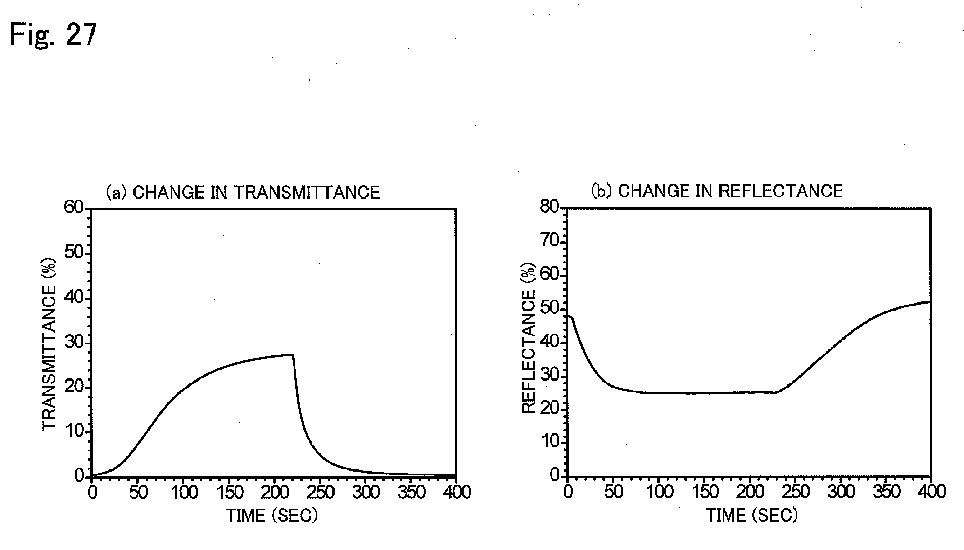

FIG. 27(a) and FIG. 27(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + 1-methyl-2-pyrrolidone + polyvinyl butyral) interposed therebetween using a conductive mesh electrode-forming PET base material.

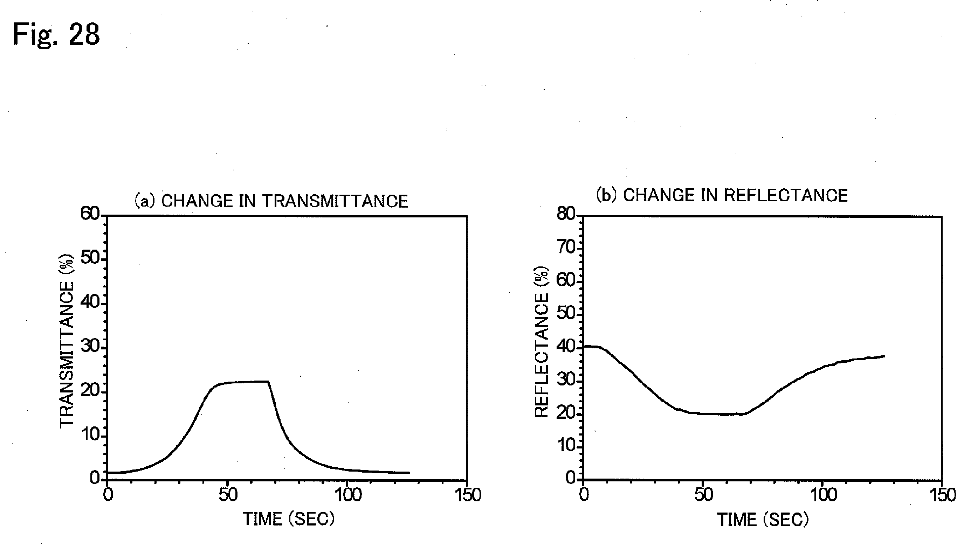

FIG. 28(a) and FIG. 28(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + γ-butyrolactone + polyvinyl butyral) interposed therebetween using a conductive mesh electrode-forming PET base material.

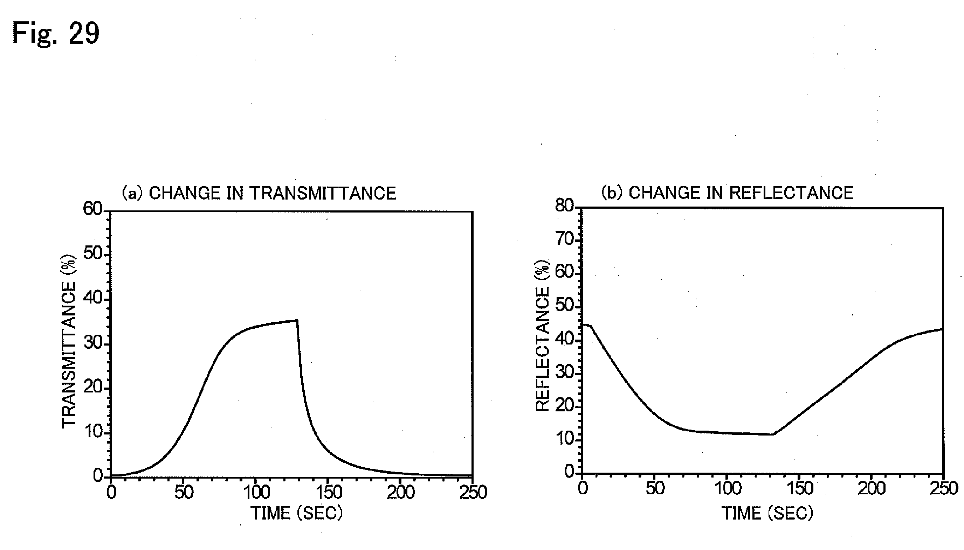

FIG. 29(a) and FIG. 29(b) are graphs showing the switching characteristics (changes over time in the optical transmittance and the optical reflectance at a wavelength of 670 nm) of a magnesium-nickel-based reflective dimming electrochromic element having a non-water-based hydrogen ion conductive electrolyte layer (polyethyleneimine + γ-butyrolactone + polyvinyl butyral) interposed therebetween using an ITO/PET base material.

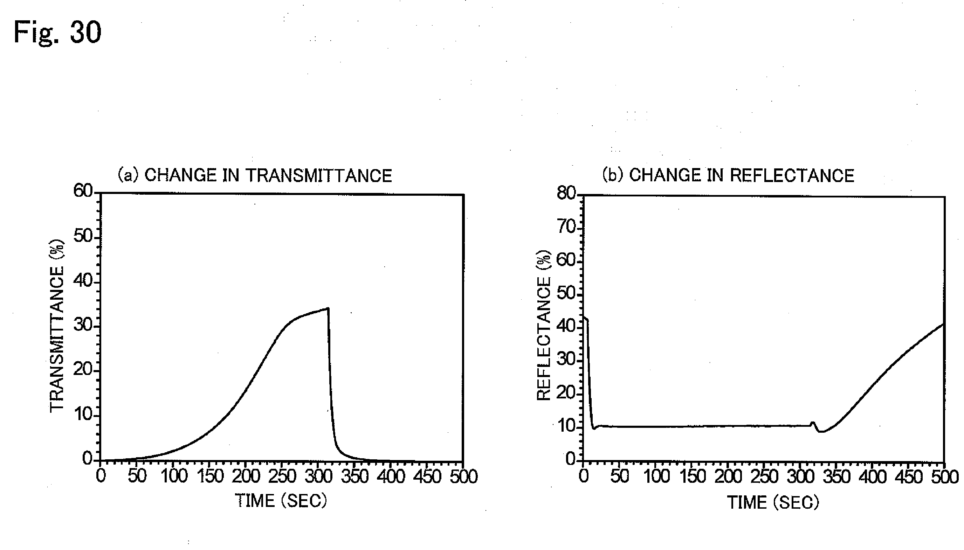

FIG. 30(a) and FIG. 30(b) are graphs showing the transmission spectrum and the reflection spectrum of a magnesium-nickel-based reflective dimming electrochromic element having a non-water-based hydrogen ion conductive electrolyte layer (ammonium persulfate + 1-methyl-2-pyrrolidone + triisopropanolamine) interposed therebetween using a polycarbonate base material.

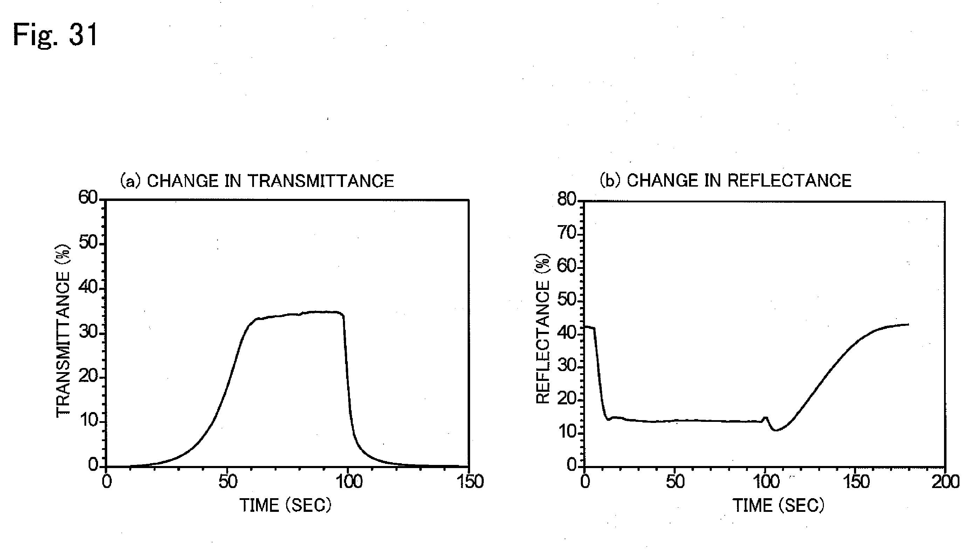

FIG. 31 (a) and FIG. 31(b) are graphs showing the transmission spectrum and the reflection spectrum of a magnesium-nickel-based reflective dimming electrochromic element having a non-water-based hydrogen ion conductive electrolyte layer (ammonium persulfate + γ-butyrolactone + triisopropanolamine) interposed therebetween using a polycarbonate base material.

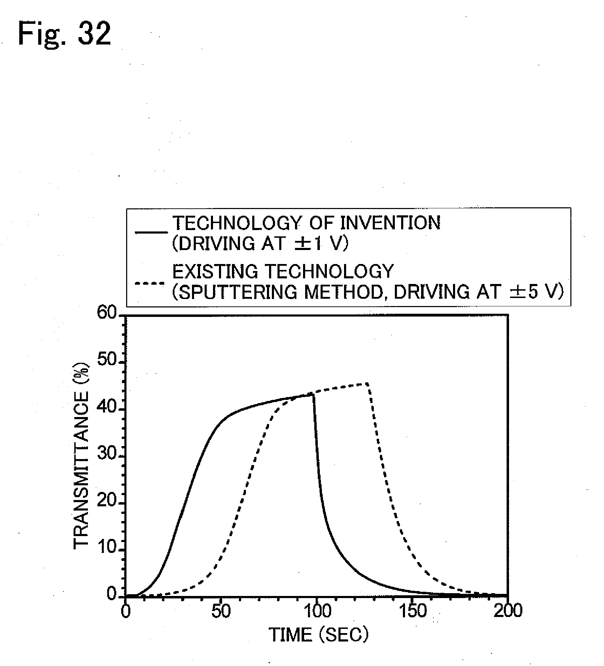

FIG. 32 is a comparison graph showing the switching characteristics (changes overtime in the optical transmittance at a wavelength of 670 nm) of a magnesium-nickel-based reflective dimming electrochromic element using a solid electrolyte layer formed by an existing sputtering method and a magnesium-nickel-based reflective dimming electrochromic element using a non-water-based hydrogen ion conductive electrolyte layer (polyethyleneimine + tetrahydrofuran + 12-hydroxystearic acid) according to the technology of the present invention.

### DESCRIPTION OF EMBODIMENTS

Next, the present invention will be described in more detail.

The reflective dimming electrochromic element of the present invention (hereinafter, simply referred to as an electrochromic element) relates to an electrochromic element which exhibits a reflective dimming action by applying a voltage to or flowing a current through the element. In this electrochromic element, a transparent electrode layer and an ion storage layer are formed on one sheet of a transparent base material, a transparent electrode layer, a reflective dimming layer, and a catalyst layer are formed on another transparent base material, and a non-water-based hydrogen ion conductive electrolyte layer is interposed between the ion storage layer and the catalyst layer.

The present invention adopts a structure in which multilayer films are packaged by laminating two sheets of transparent base materials using, in particular, a non-water-based hydrogen ion conductive electrolyte solution having adhesiveness, and therefore, the present invention has excellent convenience and handleability.

The various members constituting the electrochromic element of the present invention will be described below.

### <Transparent base material

The material or shape of the transparent base material that constitutes the electrochromic element of the present invention are not particularly limited as long as the material can function as the transparent base material of the electrochromic element. It is preferable for the transparent base material not only to function as a base on which a transparent electrode layer, an ion storage layer, a non-water-based hydrogen ion conductive electrolyte layer, a catalyst layer, a reflective dimming layer and a transparent electrode layer are formed, but also to function as a barrier that suppresses penetration of water or oxygen.

Examples of this transparent base material include glass and a resin sheet.

Examples of the glass that may be used include generally known kinds of glass, for example, clear glass, green glass, bronze glass, gray glass, blue glass, UV-cutting thermally insulating glass, thermal radiation absorbing glass, and tempered glass. These kinds of glass may be used singly, or two or more kinds may be used in combination.

A resin sheet means a transparent base material made of a synthetic polymer resin, and regarding the resin sheet used in the present invention, from the viewpoints of price, transparency, heΩat resistance and the like, for example, resin sheets formed from polyethylene terephthalate (PET), polyethylene naphthalate (PEN), polycarbonate (PC), nylon, acryl, and silicone can be preferably used. These resin sheets may be used singly, or two or more kinds may be used in combination. Also, there are no particular limitations on the combination.

Furthermore, in the case of using these resin sheets, since the film-forming process of various layers is carried out under reduced pressure conditions, it is preferable to use a material having a low amount of outgassing, from the viewpoint of maintaining the reduced pressure. Also, it is preferable that the resin sheet be colorless and transparent, but if necessary, a colored resin sheet may also be used.

Regarding the transparent base material, the aforementioned materials such as glass and resin sheets may be used in appropriate combination. Examples of such a combination include a combination of glass and glass, a combination of glass and a resin sheet, and a combination of a resin sheet and a resin sheet.

### <Transparent electrode layer>

The transparent electrode layer that constitutes the electrochromic element of the present invention is formed of a conductive material, and the optical characteristics can be controlled by applying a voltage to, and/or flowing a current through the electrochromic element. There are no particular limitations on a material of the transparent electrode, and any known material may be used. Regarding this transparent electrode, for example, when a transparent conductive film is used, one having a surface resistance of 100 Ω/□ or less is preferred, and one containing at least one of a metal, an oxide or an organic compound, each having a total light transmittance of 70% or higher, is preferred. Particularly, the transparent electrode layer is preferably selected from indium tin oxide, titanium oxide, tin oxide, zinc oxide, aluminum-doped zinc oxide, indium gallium zinc oxide, niobium oxide, and combinations of two or more kinds thereof. The transparent electrode material is not limited to these, and any material having the same effect as these, such as a carbon-based material such as graphene, or a mesh-like metal wiring, may be used without any limitations.

Furthermore, in regard to the transparent electrode layer on the transparent base material, the operation process can be simplified by using a transparent base material having a transparent electrode layer formed in advance thereon.

### <Ion storage layer>

The ion storage layer that constitutes the electrochromic element of the present invention is a layer having a function of reversibly performing storage or extraction of hydrogen ions that are necessary for the switching between the mirror state and the transmissive state of the reflective dimming layer, and any ion storage layer having these functions may be used without any particular limitations. Furthermore, an ion storage layer that is colored as necessary when hydrogen ions are extracted may be used, but a material having characteristics of becoming colorless and transparent is more preferred. This constituent material is preferably a transition metal oxide, and examples of the transition metal oxide may include tungsten oxide, molybdenum oxide, niobium oxide, and vanadium oxide.

Among these transition metal oxides, tungsten oxide having high stability (10⁶ cycles or more) is particularly preferred as the constituent material for the electrochromic element. Also, the thickness of the ion storage layer is not particularly limited, but the thickness is preferably in the range of 250 to 2000 nm.

### <Catalyst layer>

The catalyst layer that constitutes the electrochromic element of the present invention has a function as a doorway through which hydrogen ions are supplied to or released from the reflective dimming layer. The catalyst layer increases the rate of supply and release of hydrogen ions. Preferred examples of the component of the catalyst layer by which the switchability between the mirror state and the transmissive state is enhanced include palladium, platinum, silver, and alloys thereof, which all have high permeability of hydrogen ions. Examples of palladium alloys that may be suitably used include a palladium-silver alloy and a palladium-platinum alloy. Also, an enhancement of the characteristics can be promoted by incorporating other components to a palladium alloy.

Furthermore, for being an alloy, incorporation of impurities to a certain extent is tolerated, but a smaller amount of incorporation of impurities is preferred. The thickness of the catalyst layer is not particularly limited, but the thickness is preferably in the range of 0.5 to 10 nm. If the catalyst layer is too thin, the catalyst layer cannot sufficiently fulfill the function as a catalyst. On the contrary, if the catalyst layer is too thick, there is a risk that the total light transmittance of the catalyst layer may be decreased. Furthermore, when the catalyst layer has a thickness larger than a certain value, even if the thickness of the catalyst layer is further increased, the function as a catalyst no longer improves.

### <Reflective dimming layer>

The reflective dimming layer that constitutes the electrochromic element of the present invention is formed of a material having a function of switching between a mirror state and a transparent state by storing/releasing hydrogen and hydrogen ions, and has a reflective dimming function. Examples of a layer for reflective dimming include layers formed from magnesium, or magnesium-based alloys obtained by adding any one or more of nickel, titanium, niobium, zirconium, calcium and strontium. Furthermore, preferably, a magnesium-nickel-based alloy containing nickel in the range of 0.1 to 0.5 relative to one part of magnesium; a magnesium-niobium-based alloy containing niobium in the range of 0.3 to 0.6 relative to one part of magnesium; or a magnesium-zirconium-based alloy containing zirconium in the range of 0.1 to 0.5 relative to one part of magnesium, may be used.

Particularly, in regard to a magnesium-nickel-based alloy, the magnesium-nickel-based alloy containing nickel in the range of 0.1 to 0.5 tends to have an increased total light transmittance when the alloy stores hydrogen and becomes transparent. From the viewpoint of the raw material cost, MgNi_{0.25} is preferred.

Furthermore, an enhancement of the characteristics can be promoted by incorporating other components to a magnesium-based alloy, and a multi-component magnesium alloy having two or more components added thereto may also be used for the reflective dimming layer.

At the time of forming the reflective dimming layer, incorporation of impurities to a certain extent is tolerated, but a smaller amount of incorporation of impurities is preferred. The thickness of the reflective dimming layer is preferably about 10 to 200 nm. If the reflective dimming layer is too thin, the total light reflectance in the mirror state is decreased, and sufficient reflection characteristics are not easily exhibited. On the contrary, if the reflective dimming layer is too thick, there is a risk that the total light transmittance in the transparent state may be decreased. Different specifications are required depending on the use, but such difference can be appropriately coped with by controlling the film thickness.

### <Non-water-based hydrogen ion conductive electrolyte layer>

The non-water-based hydrogen ion conductive electrolyte layer that constitutes the electrochromic element of the present invention can be conveniently formed by a coating method because a solution is used as the raw material. When a non-water-based hydrogen ion conductive electrolyte layer is formed, it is important that the electrolyte layer does not induce a chemical reaction with a multilayer film. The non-water-based hydrogen ion conductive electrolyte layer is formed from the non-water-based hydrogen ion conductive electrolyte solution, and the solution contains (A) an ion conductive polymer and (B) an organic solvent, or (A) an ion conductive polymer, (B) an organic solvent, and (C) additives for exhibiting dispersibility and adhesiveness. Even if various materials other than the components described above are further added to the non-water-based hydrogen ion electrolyte solution, as long as the electrolyte solution has a performance attributable to the combination of the materials, an electrolyte layer formed by using the electrolyte solution may be considered as a non-water-based hydrogen ion conductive electrolyte layer.

Examples of the (A) ion conductive polymer include polyethyleneimine, polyacrylic acid, polyethylene glycol, polypropylene glycol, tetrabutylammonium perchlorate, tetrabutylammonium borofluoride, ammonium persulfate, and perfluorosulfonic acid-based resins (for example, NAFION manufactured by DuPont Co., FLEMION manufactured by Asahi Glass Co., Ltd., and ACIPLEX manufactured by Asahi Kasei Corp.), and any material which can exhibit high hydrogen ion conductivity can be similarly used.

Examples of the (B) organic solvent used herein include solvents that can disperse or dissolve ion conductive polymers, for example, tetrahydrofuran, propylene carbonate, ethylene carbonate, diethyl carbonate, dimethyl carbonate, ethanol, acetone, propanol, γ-butyrolactone, 1-methyl-2-pyrrolidone, 1,3-dioxolane, toluene, cyclohexane, 1-methoxy-2-propanol, tetrahydrofurfuryl alcohol, 2-methoxyethanol, α-terpineol, and analogues thereof. These may be used singly, or a mixed solvent combining plural solvents may be used.

Furthermore, examples of the (C) additives for exhibiting dispersibility and adhesiveness include polyvinyl butyral, polyvinylpyrrolidone, polytetrafluoro- ethylene, polyvinylidene fluoride, polymethyl methacrylate, polyvinyl chloride, polyethylene, 12-hydroxystearic acid, lauroylglutamic acid dibutylamide, dibenzylidene sorbitol, polysilane, an ethylene-vinyl acetate copolymer resin, ethyl cellulose and triisopropanolamine, but any additives that satisfy dispersibility and adhesive force may be used without any particular limitations. When a polysilane (for example, SI-10-10 manufactured by Osaka Gas Chemicals Co., Ltd.) is added, since the solution has a nature of being solidified by ultraviolet (UV) irradiation, the solution is applied at the time of base material bonding and is irradiated with ultraviolet radiation, and thereby the solution is adhered and solidified.

In regard to the selection of the mixed material system that constitutes this non-water-based hydrogen ion conductive electrolyte solution, it is necessary to select a system that does not contain water as far as possible. Therefore, for example, in the case of selecting ethanol as an organic solvent, it is preferable to use anhydrous ethanol. Furthermore, it is preferable to adjust the non-water-based hydrogen ion conductive electrolyte solution to basicity so as to have a hydrogen ion concentration index (pH) of 7 or higher. After mixing of various materials, when the solution exhibits acidity, satisfactory characteristics can be obtained by adjusting the solution to have a pH value larger than 7 by adding basic substances. Furthermore, when a cationic conductive polymer represented by polyethyleneimine is selected as the ion conductive polymer, there is no need for pH adjustment, and satisfactory basicity of the solution can be obtained. For such a cationic conductive polymer, various can be selected from polyallylamine, polyvinylamine, polyvinylpyridine, polylysine, polyornithine, polyarginine, chitosan, polylysine and the like. Furthermore, in view of the characteristics of the element of the present invention, it is preferable that the non-water-based hydrogen ion conductive electrolyte layer have high transparency, without causing extensive coloration or cloudiness. Also, in regard to the non-water-based hydrogen ion conductive electrolyte layer, it is more preferable that the electrolyte layer be formed of a material which, when used to form a layer, results in a multilayer film having a thickness that does not markedly impair the dimming characteristics such as a decrease in the maximum transmittance. In addition, it is essential to select a material system that does not dissolve the reflective dimming layer and the catalyst layer. For example, depending on the kind of the organic solvent such as dimethylformamide (DMF), acetonitrile or hydrated ethanol, the organic solvent undergoes a reaction with the reflective dimming layer and the catalyst layer, causing the reflective dimming layer and the catalyst layer to dissolve therein. Therefore, for the non-water-based hydrogen ion conductive electrolyte solution of the present invention, it is important to select a material system that does not cause a reaction with the reflective dimming layer and the catalyst layer, for example, tetrahydrofuran, propylene carbonate, styrene carbonate, dehydrated ethanol, γ-butyrolactone, 1-methyl-2-pyrrolidone, 1,3-dioxolane, cyclohexane or toluene described above as examples.

Next, the specific structure of the electrochromic element of the present invention that is configured using the members such as described above will be described with reference to the drawings.

FIG. 1 is a schematic cross-sectional diagram illustrating an embodiment of an electrochromic element of the present invention.

This electrochromic element of FIG. 1 is configured to include a transparent base material 10, a transparent electrode layer 20, an ion storage layer 30, a non-water-based hydrogen ion conductive electrolyte layer 90, a catalyst layer 40, a reflective dimming layer 50, a transparent electrode layer 60, and a transparent base material 70. Then, an electrode for switching is connected to the transparent electrode layer 20 and the transparent electrode 60. In this configuration, there is formed a structure in which the transparent electrode layer 20 and the ion storage layer 30 are formed on the transparent base material 10, while the transparent electrode layer 60, the reflective dimming layer 50 and the catalyst layer 40 are formed on the transparent base material 70, and a non-water-based hydrogen ion conductive electrolyte solution 80 is interposed between the ion storage layer 30 and the catalyst layer 40 of those two members. After the formation of the element, the non-water-based hydrogen ion conductive electrolyte solution 80 functions as a non-water-based hydrogen ion conductive electrolyte layer 90.

Meanwhile, in the present invention, the term "on" used in the descriptions such as "on the catalyst layer" has a meaning specifying the direction of the layer that is laminated, and does not necessarily mean that the layer is disposed adjacently. For example, in the case of the phrase "the catalyst layer is formed on the reflective dimming layer", there are a case in which the reflective dimming layer and the catalyst layer are disposed adjacently, and a case in which the reflective dimming layer and the catalyst layer are disposed with another layer interposed therebetween.

Furthermore, the technical scope of the present invention is not intended to be limited to the above-described embodiment. In the present invention, for example, as illustrated in FIG. 2, a configuration in which a reflective dimming layer 50 and a catalyst layer 40 are formed directly on a transparent base material 70 can be adopted. In this configuration, an electrode for switching is connected to a transparent electrode layer 20 and the reflective dimming layer 50. In this configuration, since a transparent electrode layer 60 is unnecessary, the configuration is advantageous in view of cost, and is superior in increasing the transmittance of the transparent state.

In an electrochromic element using a resin sheet as a transparent base material 10 and/or 70, in order to more effectively inhibit the penetration of moisture or oxygen in air into the interior of the element from the viewpoint of preventing environmental deterioration, an embodiment of further sandwiching the element with a pair of glass plates as illustrated in FIG. 3 can be adopted.

FIG. 3 illustrates a schematic cross-sectional diagram of a reflective dimming plate in which an electrochromic element is sandwiched with a pair of glass plates 110. An intermediate film 100 for laminated glass, which is made of polyvinyl butyral or the like, may be interposed between the glass plate 110 and the electrochromic element, as necessary.

The electrochromic element of the present invention is suitably applied to, for example, dimming members for construction members or parts for transport vehicles such as automobiles, due to the function of the element. In the case of construction members, window glass is a representative member for application. In transport vehicles, examples of applications can include window glass, outer panels and interior decorations. When the electrochromic element of the present invention is used, the amount of energy penetration of sunlight can be controlled, and the interior space can be maintained in a pleasant state.

The thin films that constitute the various layers of the electrochromic element of the present invention may be formed using generally known film forming methods without any particular limitations. Examples of these film forming methods may include methods such as a magnetron sputtering method, a vacuum deposition method, an electron beam deposition method, a chemical vapor deposition (CVD) method, a plating method, a dip coating method, and a spin coating method.

There are no particular limitations on the size and thickness of the various layers that constitute the electrochromic element. These can be determined by making reference to known structures, and are appropriately adjusted in accordance with the use or required performance.

For example, if the electrochromic element is used in the windshield of an automobile, the size of the transparent base material is determined according to the design of the vehicle. Furthermore, the thickness is also determined in consideration of the light transmittance, strength and the like of the dimming material.

Furthermore, when the reflective dimming electrochromic element of the present invention is produced, various embodiments may be employed; however, it is considered preferable to employ the bonding method by which the present invention is characterized. In this method, for example, a transparent electrode layer 20 and an ion storage layer 30 are formed on a transparent base material 10, and a transparent electrode layer 60, a reflective dimming layer 50 such as a thin film of a magnesium-nickel-based alloy, a magnesium-titanium-based alloy, a magnesium-niobium-based alloy or a magnesium-zirconium-based alloy, and a catalyst layer 40 are formed on another transparent base material 70. These two members are bonded by a non-water-based hydrogen ion conductive electrolyte layer 90.

By this convenient method of bonding, a structure in which the non-water-based hydrogen ion conductive electrolyte layer 90 is interposed between two members is formed.

The dimming operation of the reflective dimming electrochromic element in the embodiments of FIG. 1 and FIG. 3 is carried out by applying a voltage/current between the transparent electrode layer 20 and the transparent electrode layer 60. That is, when the electrochromic element is in the mirror state, if a positive voltage is applied to the transparent electrode layer 20 and a negative voltage is applied to the transparent electrode layer 60, the hydrogen ions stored in the ion storage layer 30 diffuse through the non-water-based hydrogen ion conductive electrolyte layer 90 and the catalyst layer 40 to the reflective dimming layer 50, and the reflective dimming layer 50 is transformed into a hydrogen compound. Therefore, the reflection characteristics of the layer are changed from the mirror state to the transmissive state.

At this time, the catalyst layer 40 has a function of accelerating the giving and receiving of hydrogen ions between the non-water-based hydrogen ion conductive electrolyte layer 90 and the reflective dimming layer 50, and a sufficient switching rate at the reflective dimming layer 50 is secured by the catalyst layer 40. On the contrary, when the electrochromic element is in the transparent state, if a negative voltage is applied to the ion storage layer 20, and a positive voltage is applied to the transparent electrode layer 60, hydrides in the reflective dimming layer 50 are dehydrogenated, and the reflection characteristics are reverted from the transparent state to the mirror state. Released hydrogen returns in the form of hydrogen ions through the catalyst layer 40 and the non-water-based hydrogen ion conductive electrolyte layer 90 to the ion storage layer 30, where hydrogen is stored.

In the embodiment of FIG. 2, the reflective dimming layer 50 takes the function of the transparent electrode layer 60 described above as well.

In a conventional element using a magnesium-based alloy as a reflective dimming element, since a process of forming a multilayer film is sequentially formed on a transparent base material, there has also been a risk in view of size extension, process time (productivity), and cost. On the contrary, in the present invention, when layers are formed on two sheets of transparent base materials as described above, and for example, a non-water-based hydrogen ion conductive electrolyte solution having adhesiveness is interposed between the layers, production of the element is enabled only by conveniently bonding the layers by the same effect as that given by normal adhesives, and furthermore a reflective dimming electrochromic element which exhibits variability of the total light transmittance and total light reflectance at an arbitrary wavelength due to the components of the non-water-based hydrogen ion conductive electrolyte layer used, and a dimming member having the element incorporated therein can be provided. The present invention is useful as a practical reflective dimming electrochromic material and as a dimming member.

### EXAMPLES

Hereinafter, the present invention will be described in further detail by way of Examples, but the present invention is not intended to be limited to these Examples. Examples 1 to 11 are examples related to elements each produced using a non-water-based hydrogen ion conductive electrolyte solution containing an ion conductive polymer, an organic solvent and additives, and Examples 12 to 16 are examples related to elements each produced using a non-water-based hydrogen ion conductive electrolyte solution containing an ion conductive polymer and an organic solvent. Furthermore, the various components of the non-water-based hydrogen ion conductive electrolyte solutions, and comparisons with known methods are described in Examples 17 to 19.

### Example 1

Hereinafter, Example 1 of the present invention will be described. In the present Example, a reflective dimming electrochromic element was produced to have the configuration illustrated in FIG. 1.

First, a glass plate having a thickness of 1.1 mm was used as a transparent base material 10, and was coated with a tin-doped indium oxide having a surface resistivity of 10 Ω/□ as a transparent electrode layer 20. This was mounted in a vacuum apparatus, and the apparatus was evacuated to a vacuum. On the transparent electrode layer 20 thus formed, vapor deposition of a tungsten oxide thin film as an ion storage layer 30 was carried out using a magnetron sputtering apparatus. Film formation was carried out using a reactive DC magnetron sputtering method of sputtering a tungsten metal target in a mixed atmosphere of argon and oxygen.

The mixed atmosphere was controlled by controlling the flow rate of argon gas and oxygen gas. The ratio of flow rate of argon gas and oxygen gas was 7:1.5, and film formation was carried out by the DC magnetron sputtering method by applying a power of 80 W to tungsten, at a pressure inside the vacuum chamber of 1.0 Pa. The film thickness of the tungsten oxide thin film thus produced was about 500 nm.

Similarly, a glass plate having a thickness of 1.1 mm was used as a transparent base material 70, and was coated with a tin-doped indium oxide having a surface resistivity of 10 Ω/□ as a transparent electrode layer 60. On this transparent electrode layer 60, vapor deposition of a magnesium-nickel alloy thin film as a reflective dimming layer 50 and palladium as a catalyst layer 40 was carried out sequentially using a triple magnetron sputtering apparatus. Magnesium metal, nickel metal and palladium metal were respectively mounted on three sputter guns as targets. First, a power of 30 W was applied to magnesium, a power of 16 W was applied to nickel, and thus a reflective dimming layer 50 formed of a magnesium-nickel alloy thin film having a thickness of about 40 nm was deposited. The composition of magnesium and nickel at this time was almost Mg₄Ni. Next, palladium metal was sputtered, and thus a palladium thin film having a thickness of about 4 nm as a catalyst layer 40 was deposited. The argon gas pressure during sputtering was 1.2 Pa, and a power of 18 W was applied to palladium by a DC magnetron sputtering method to perform sputtering.

Furthermore, a non-water-based hydrogen ion conductive electrolyte solution 80 was prepared. First, 0.1 ml of polyethyleneimine (molecular weight 600) as an ion conductive polymer was measured off and was diluted in 10 ml of anhydrous ethanol. After dissolving the polymer, 0.10 g to 0.75 g of polyvinyl butyral (degree of polymerization 2400) was added thereto. The hydrogen ion index of the solution thus prepared was 12. Subsequently, the solution 80 was applied on the ion storage layer 30 formed from a tungsten oxide thin film on the transparent base material 10, and thereafter, the transparent base material 70 was covered to cause the solution to adhere closely to the palladium catalyst layer 40 on the transparent base material 70. Thus, a laminated structure was produced.

The element thus obtained was mounted on an evaluation apparatus as illustrated in FIG. 4, and the optical switching characteristics were investigated by connecting electrodes to the transparent electrode layer 20 on the transparent base material 10 and the transparent electrode layer 60 on the transparent base material 70, respectively. The initial state of this switching element was a mirror state.

A voltage of ±2.5 V was applied between the electrodes, and the changes in the optical transmittance and the optical reflectance at that time were measured with a measurement system combining a semiconductor laser having a wavelength of 670 nm and a silicon photodiode.

Meanwhile, in the evaluation apparatus of FIG. 4, the diagram shows the reflective dimming electrochromic element 501 thus produced, a semiconductor laser 502, a Si photodiode 503, a digital multimeter 504, a SourceMeter 505, and a computer 507.

According to this measurement, the element produced using the non-water-based hydrogen ion conductive electrolyte solution 80 containing 0.10 g of polyvinyl butyral as described above is such that since the magnesium-nickel-based alloy thin film as the reflective dimming layer 50 has metallic gloss, the thin film reflects light satisfactorily (optical reflectance: about 44%), and since the tungsten oxide thin film as the ion storage layer 30 is colored dark blue, the transmittance is very low (optical transmittance: about 0.2%). When a voltage of -2.5 V was applied to this multilayer film, the hydrogen ions in the ion storage layer 30 formed from a tungsten oxide thin film diffused into a non-water-based hydrogen ion conductive electrolyte layer 90, and were introduced through the palladium catalyst layer 40 to the reflective dimming layer 50 formed from a magnesium-nickel-based alloy thin film.

As a result, the ion storage layer 30 formed from a tungsten oxide thin film became transparent, and the reflective dimming layer 50 formed from a magnesium-nickel-based alloy thin film also underwent hydrogenation and became transparent (optical reflectance: about 15%, optical transmittance: about 32%). Similarly, the changes over time in the optical transmittance and the optical reflectance at this time were measured with respect to the amount of addition of polyvinyl butyral (PVB, degree of polymerization: 2400), and the data are presented in FIG. 5(a) and FIG. 5(b). As shown in FIG. 5, in the elements which used a mixed solution of polyethyleneimine, anhydrous ethanol and polyvinyl butyral as the non-water-based hydrogen ion conductive electrolyte solution 80, all exhibited the transmissive state after voltage application, and when a voltage of +2.5 V was applied after completion of the transparent state, the transmittance was decreased, causing the element to return to the reflective state.

Furthermore, the transmission spectra of the element before and after switching are presented in FIG. 6. As shown in FIG. 6, it is understood that the transmission spectrum at the measurement wavelength undergoes a significant change by switching.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 2

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60 : tin-doped indium oxide/a reflective dimming layer 50 : a magnesium-nickel-based alloy/a catalyst layer 40 : palladium was carried out on a transparent base material 70 formed from a glass substrate, using a magnetron sputtering method. The various film forming conditions are the same as in Example 1.

Furthermore, a non-water-based hydrogen ion conductive electrolyte solution 80 was prepared by measuring off 0.1 ml of polyethyleneimine (molecular weight 600) as an ion conductive polymer, diluting the polymer in 10 ml of γ-butyrolactone, dissolving the polymer, and then adding 0.10 g to 0.50 g of polyvinylpyrrolidone (PVP) K25 thereto. The hydrogen ion index of the solution 80 thus prepared was 12. The solution 80 was applied on the ion storage layer 30 formed from a tungsten oxide thin film on the transparent base material 10 formed from a glass substrate, and subsequently, the transparent base material 70 formed from a glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70, respectively. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element produced using the non-water-based hydrogen ion conductive electrolyte solution 80 containing 0.10 g of polyvinylpyrrolidone is such that since the magnesium-nickel-based alloy thin film as the reflective dimming layer 50 has metallic gloss, the thin film reflects light satisfactorily (optical reflectance: about 44%), and since the tungsten oxide thin film as the ion storage layer 30 is colored dark blue, the transmittance is very low (optical transmittance: about 0.2%). When a voltage of-2.5 V was applied to this multilayer film, the hydrogen ions in the ion storage layer 30 formed from a tungsten oxide thin film diffused into a non-water-based hydrogen ion conductive electrolyte layer 90, and were introduced through the palladium catalyst layer 40 to the reflective dimming layer 50 formed from a magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 16%, optical transmittance: about 31%). Similarly, the changes over time in the optical transmittance and the optical reflectance were measured with respect to the amount of addition of polyvinyl pyrrolidone (PVP) K25, and the data are presented in FIG. 7(a) and FIG. 7(b). As shown in FIG. 7(a) and FIG. 7(b), in the elements which used a mixed solution of polyethyleneimine, γ-butyrolactone and polyvinylpyrrolidone as the non-water-based hydrogen ion conductive electrolyte solution 80, all exhibited the transmissive state after voltage application, and when a voltage of +2.5 V was applied after completion of the transparent state, the transmittance was decreased, causing the element to return to the reflective state.

Furthermore, the transmission spectra of the element before and after switching are presented in FIG. 8. As shown in FIG. 8, it is understood that the transmission spectrum at the measurement wavelength undergoes a significant change by switching.

The present element can reversibly switch between a reflective state and a transmissive state by changing the polarity of the applied voltage. As such, it was confirmed that convenient element production was achievable by bonding transparent base materials to each other using the non-water-based hydrogen ion conductive electrolyte solution 80, and the element thus produced exhibited excellent dimming characteristics.

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60 : tin-doped indium oxide/a reflective dimming layer 50 : a magnesium-nickel-based alloy/a catalyst layer 40 : palladium was carried out on a glass substrate 2, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in 10 ml of propylene carbonate, dissolving the polymer, and then adding 0.25 g of polyvinylpyrrolidone (PVP) K25 thereto. The hydrogen ion index of the solution 80 thus prepared was 12. The solution 80 was applied on the ion storage layer 30 formed from the tungsten oxide thin film on the transparent base material 10 formed from the glass substrate, and subsequently, a transparent base material 70 formed from a glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with a measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 46%), and since the tungsten oxide thin film as the ion storage layer 30 is colored dark blue, the transmittance is very low (optical transmittance: about 0.2%).

When a voltage of -2.5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 9%, optical transmittance: about 30%). The changes over time in the optical transmittance and the optical reflectance are presented in FIG. 9(a) and FIG. 9(b). As shown in FIG. 9(a) and FIG. 9(b), in the element which used a mixed solution of polyethyleneimine, propylene carbonate and polyvinylpyrrolidone as the non-water-based hydrogen ion conductive electrolyte solution 80, the element exhibited the transmissive state after voltage application, and when a voltage of +2.5 V was applied after completion of the transparent state, the transmittance was decreased, causing the element to return to the reflective state. Furthermore, the transmission spectra of the element before and after switching are presented in FIG. 9(c). As shown in FIG. 9(c), it is understood that the transmission spectrum at the measurement wavelength undergoes a significant change by switching.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 4

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60 : tin-doped indium oxide/a reflective dimming layer 50 : a magnesium-nickel-based alloy/a catalyst layer 40 : palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in 10 ml of tetrahydrofuran, dissolving the polymer, and then adding 1 g of a polysilane (SI-10-10 manufactured by Osaka Gas Chemicals Co., Ltd.) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced. In order to solidify the solution, the solution was irradiated with ultraviolet radiation at a wavelength of 365 nm for about 3 minutes using an ultraviolet curing apparatus having an ultraviolet radiation intensity of 170 mW/cm².

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 51%), and since the tungsten oxide thin film as the ion storage layer 30 is colored dark blue, the transmittance is very low (optical transmittance: about 0.2%).

When a voltage of -2 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from a tungsten oxide thin film became transparent, and the reflective dimming layer 50 formed from a magnesium-nickel-based alloy thin film also underwent hydrogenation and became transparent (optical reflectance: about 9%, optical transmittance: about 30%). The changes over time in the optical transmittance and the optical reflectance at this time are presented in FIG.10(a) and FIG. 10(b). As shown in FIG. 10(a) and FIG. 10(b), in the element which used a mixed solution of polyethyleneimine, tetrahydrofuran and polysilane as the non-water-based hydrogen ion conductive electrolyte solution 80, the element similarly exhibited the transmissive state after voltage application, and when a voltage of +2 V was applied after completion of the transparent state, the transmittance was decreased, causing the element to return to the reflective state. Furthermore, the transmission spectra of the element before and after switching are presented in FIG. 10(c) and FIG. 10(d). As shown in FIG. 10(c) and FIG. 10(d), it is understood that the transmission spectrum at the measurement wavelength undergoes a significant change by switching.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 5

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60 : tin-doped indium oxide/a reflective dimming layer 50 : a magnesium-nickel-based alloy/a catalyst layer 40 : palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in 10 ml of tetrahydrofuran, dissolving the polymer, and then adding 0.5 g of polyvinylidene fluoride thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 48%), and since the tungsten oxide thin film as the ion storage layer 30 is colored dark blue, the transmittance is very low (optical transmittance: about 0.2%).

When a voltage of -2.5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 10%, optical transmittance: about 33%). The changes over time in the optical transmittance and the optical reflectance at this time are presented in FIG. 11(a) and FIG. 11(b). As shown in FIG. 11(a) and FIG. 11(b), in the element which used a mixed solution of polyethyleneimine, tetrahydrofuran and polyvinylidene fluoride as the non-water-based hydrogen ion conductive electrolyte solution 80, the element similarly exhibited the transmissive state after voltage application, and when a voltage of +2.5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 6

By the same procedure as in Example 1, an ion storage layer 30: tungsten oxide was deposited on a transparent base material 10 formed from a glass substrate coated with tin-doped indium oxide as a transparent electrode layer 20, and a transparent electrode layer 60: tin-doped indium oxide was deposited on a transparent base material 70 formed from a glass substrate. A reflective dimming layer 50 was prepared using a magnesium-titanium-based alloy, applying a power of 25 W to magnesium and a power of 25 W to titanium, and depositing a magnesium titanium alloy thin film having a thickness of about 40 nm. The composition of magnesium and titanium at this time was almost Mg₉Ti. Thereafter, deposition of various thin films of a catalyst layer 40: palladium was carried out using a magnetron sputtering method.

A non-water-based hydrogen ion conductive electrolyte solution 80 was prepared by measuring off 0.1 ml of polyethyleneimine (molecular weight 600) as an ion conductive polymer, diluting the polymer in 10 ml of tetrahydrofuran, dissolving the polymer, and then adding 0.10 g to 0.75 g of polyvinyl butyral (PVB, degree of polymerization: 2400) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

For example, the element produced using the non-water-based hydrogen ion conductive electrolyte solution 80 containing 0.10 g of polyvinyl butyral is such that since the magnesium-titanium-based alloy thin film as the reflective dimming layer 50 has metallic gloss, the thin film reflects light satisfactorily (optical reflectance: about 51%), and since the tungsten oxide thin film as the ion storage layer 30 is colored dark blue, the transmittance is very low (optical transmittance: about 0.2%). When a voltage of -2.5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-titanium-based alloy thin film.

As a result, the ion storage layer 30 formed from a tungsten oxide thin film became transparent, and the reflective dimming layer 50 formed from a magnesium-titanium-based alloy thin film also underwent hydrogenation and became transparent (optical reflectance: about 13%, optical transmittance: about 29%). The changes over time in the optical transmittance and the optical reflectance at this time were measured with respect to the amount of addition of polyvinyl butyral (PVB, degree of polymerization: 2400), and the data are presented in FIG. 12(a) and FIG. 12(b). As shown in FIG. 12(a) and FIG. 12(b), in the element which used a mixed solution of polyethyleneimine, tetrahydrofuran and polyvinyl butyral as the non-water-based hydrogen ion conductive electrolyte solution 80, the element similarly exhibited the transmissive state after voltage application, and when a voltage of +2.5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 7

By the same procedure as in Example 6, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-titanium-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml of polyethyleneimine (molecular weight 600) as an ion conductive polymer, diluting the polymer in 10 ml of anhydrous ethanol, dissolving the polymer, and then adding 0.10 g to 0.50 g of polyvinyl butyral (PVB, degree of polymerization: 2400) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±1.5 V was applied between the electrodes, and the changes in the optical transmittance and the optical reflectance at that time were measured with the measurement system combining the semiconductor laser having a wavelength of 670 nm and the silicon photodiode.

For example, the element produced using the non-water-based hydrogen ion conductive electrolyte solution 80 containing 0.10 g of polyvinyl butyral is such that since the magnesium-titanium-based alloy thin film as the reflective dimming layer 50 has metallic gloss, the thin film reflects light satisfactorily (optical reflectance: about 45%), and since the tungsten oxide thin film as the ion storage layer 30 is colored dark blue, the transmittance is very low (optical transmittance: about 0.2%). When a voltage of -1.5 V was applied to this multilayer film, the hydrogen ions in the tungsten oxide thin film diffused into a non-water-based hydrogen ion conductive electrolyte layer 90, and were introduced through the palladium catalyst layer 40 to the reflective dimming layer 50 formed from the magnesium-titanium-based alloy thin film.

As a result, the ion storage layer 30 formed from the tungsten oxide thin film became transparent, and the reflective dimming layer 50 formed from the magnesium-titanium-based alloy thin film also underwent hydrogenation and became transparent (optical reflectance: about 12%, optical transmittance: about 30%). The changes over time in the optical transmittance and the optical reflectance at this time were measured with respect to the amount of addition of polyvinyl butyral (PVB, degree of polymerization: 2400), and the data are presented in FIG. 13(a) and FIG. 13(b). As shown in FIG. 13(a) and FIG. 13(b), in the element which used a mixed solution of polyethyleneimine, anhydrous ethanol and polyvinyl butyral as the non-water-based hydrogen ion conductive electrolyte solution 80, the element similarly exhibited the transmissive state after voltage application, and when a voltage of +1.5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 8

An ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a polyethylene terephthalate (PET) resin substrate, using a magnetron sputtering method.

A non-water-based hydrogen ion conductive electrolyte solution 80 was prepared by measuring off 0.1 ml of polyethyleneimine (molecular weight 600) as an ion conductive polymer, diluting the polymer in 10 ml of tetrahydrofuran, dissolving the polymer, and then adding 0.50 g of polyvinyl butyral (PVB, degree of polymerization: 2400) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the PET substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 formed from the glass base material and the transparent electrode layer 60 on the transparent base material 70 formed from the PET base material. The initial state of this switching element was a mirror state.

A voltage of ±5 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 49%), and since the tungsten oxide thin film as the ion storage layer 30 is colored dark blue, the transmittance is very low (optical transmittance: about 0.2%).

When a voltage of -5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 15%, optical transmittance: about 30%). The changes over time in the optical transmittance and the optical reflectance at this time are presented in FIG. 14(a) and FIG. 14(b). As shown in FIG. 14(a) and FIG. 14(b), in the element which used a mixed solution of polyethyleneimine, tetrahydrofuran and polyvinyl butyral as the non-water-based hydrogen ion conductive electrolyte solution 80, the element similarly exhibited the transmissive state after voltage application, and when a voltage of +5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 9

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in a mixed solution of 5 ml of tetrahydrofuran and 5 ml of propylene carbonate, dissolving the polymer, and then adding 0.1 g of 12-hydroxystearic acid thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a bonded structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 47%), and since the tungsten oxide thin film as the ion storage layer 30 is colored dark blue, the transmittance is very low (optical transmittance: about 0.2%).

When a voltage of -2.5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 10%, optical transmittance: about 32%). The changes over time in the optical transmittance and the optical reflectance at this time are presented in FIG. 15(a) and FIG. 15(b). As shown in FIG. 15(a) and FIG. 15(b), in the element which used a mixed solution of polyethyleneimine, tetrahydrofuran, propylene carbonate and 12-hydroxystearic acid as the non-water-based hydrogen ion conductive electrolyte solution 80, the element similarly exhibited the transmissive state after voltage application, and when a voltage of +2.5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 10

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in 10 ml of 1,3-dioxolane, dissolving the polymer, and then adding 0.5 g of polyvinyl butyral (PVB, degree of polymerization: 2400) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 45%), and since the tungsten oxide thin film as the ion storage layer 30 is colored dark blue, the transmittance is very low (optical transmittance: about 0.3%).

When a voltage of -2.5 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 17%, optical transmittance: about 27%). The changes over time in the optical transmittance and the optical reflectance at this time are presented in FIG. 16(a) and FIG. 16(b). As shown in FIG. 16(a) and FIG. 16(b), in the element which used a mixed solution of polyethyleneimine, 1,3-dioxolane and polyvinyl butyral as the non-water-based hydrogen ion conductive electrolyte solution 80, the element similarly exhibited the transmissive state after voltage application, and when a voltage of +2.5 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 11

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethyleneimine (molecular weight 600) as an ion conductive polymer, diluting the polymer in 10 ml of tetrahydrofuran, dissolving the polymer, and then adding 0.1 g of dibenzylidene sorbitol (GELOL D manufactured by New Japan Chemical Co., Ltd.) thereto. The hydrogen ion index of the solution 80 thus prepared was 12. The solution 80 was applied on the ion storage layer 30 formed from the tungsten oxide thin film on the transparent base material 10 formed from the glass substrate, and subsequently, the transparent base material 70 formed from the glass substrate was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 47%), and since the tungsten oxide thin film as the ion storage layer 30 is colored dark blue, the transmittance is very low (optical transmittance: about 0.2%).

When a voltage of -2 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 17%, optical transmittance: about 25%). The changes over time in the optical transmittance and the optical reflectance at this time are presented in FIG. 17(a) and FIG. 17(b). As shown in FIG. 17(a) and FIG. 17(b), in the element which used a mixed solution of polyethyleneimine, tetrahydrofuran and dibenzylidene sorbitol as the non-water-based hydrogen ion conductive electrolyte solution 80, the element similarly exhibited the transmissive state after voltage application, and when a voltage of +2 V was applied after completion of the transparent state, the transmittance was decreased, causing the element to return to the reflective state.

The present element can reversibly switch between a reflective state and a transmissive state by changing the polarity of the applied voltage. As such, it was confirmed that convenient element production was achievable by laminating transparent base materials to each other using the non-water-based hydrogen ion conductive electrolyte solution 80, and the element thus produced exhibited excellent dimming characteristics.

### Example 12

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml and 0.25 ml of polyethyleneimine (PEI, molecular weight 600) as a hydrogen ion conductive polymer, and diluting the polymer respectively in 10 ml of tetrahydrofuran. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

For example, the element produced using the non-water-based hydrogen ion conductive electrolyte solution 80 containing 0.10 ml of polyethyleneimine is such that since the magnesium-titanium-based alloy thin film as the reflective dimming layer 50 has metallic gloss, the thin film reflects light satisfactorily (optical reflectance: about 47%), and since the tungsten oxide thin film as the ion storage layer 30 is colored dark blue, the transmittance is very low (optical transmittance: about 0.3%). When a voltage of -2 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-titanium-based alloy thin film.

As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 17%, optical transmittance: about 31 %). The changes over time in the optical transmittance and the optical reflectance at this time are presented in FIG. 18(a) and FIG. 18(b). As shown in FIG. 18(a) and FIG. 18(b), in the element which used a mixed solution of polyethyleneimine and tetrahydrofuran as the electrolyte solution 80, the element similarly exhibited the transmissive state after voltage application, and when a voltage of +2 V was applied after completion of the transparent state, the transmittance was decreased, causing the element to return to the reflective state.

Furthermore, the transmission spectra and the reflection spectra of the element before and after switching are presented in FIG. 19(a) to FIG. 19(d). As shown in FIG. 19(a) to FIG. 19(d), it is understood that the transmission spectrum and the reflection spectrum at the measurement wavelength undergo significant changes by switching.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 13

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, and diluting the polymer in 10 ml of propylene carbonate. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 45%), and since the tungsten oxide thin film as the ion storage layer 30 is colored dark blue, the transmittance is very low (optical transmittance: about 0.3%).

When a voltage of -2 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 14%, optical transmittance: about 32%). The changes over time in the optical transmittance and the optical reflectance at this time are presented in FIG. 20(a) and FIG. 20(b). As shown in FIG. 20(a) and FIG. 20(b), in the element which used a mixed solution of polyethyleneimine and propylene carbonate as the electrolyte solution 80, the element similarly exhibited the transmissive state after voltage application, and when a voltage of +2 V was applied after completion of the transparent state, the transmittance was decreased, causing the element to return to the reflective state.

Furthermore, the transmission spectra and the reflection spectra of the element before and after switching are presented in FIG. 21(a) and FIG. 21(b). As shown in FIG. 21(a) and FIG. 21(b), it is understood that the transmission spectrum and the reflection spectrum at the measurement wavelength undergo significant changes by switching.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 14

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.5 ml and 1 ml of polyethyleneimine (PEI, molecular weight 600) as a hydrogen ion conductive polymer, and diluting the polymer in a mixed solution of 5 ml of propylene carbonate and 5 g of ethylene carbonate. The hydrogen ion index of the solution thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

For example, the element produced using a non-water-based hydrogen ion conductive electrolyte containing 0.5 ml of polyethyleneimine is such that since the magnesium-nickel-based alloy thin film as the reflective dimming layer 50 has metallic gloss, the thin film reflects light satisfactorily (optical reflectance: about 52%), and since the tungsten oxide thin film as the ion storage layer 30 is colored dark blue, the transmittance is very low (optical transmittance: about 0.3%). When a voltage of -2 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 16%, optical transmittance: about 29%). The changes over time in the optical transmittance and the optical reflectance at this time are presented in FIG. 22(a) and FIG. 22(b). As shown in FIG. 22(a) and FIG. 22(b), in the element which used a mixed solution of polyethyleneimine, propylene carbonate and ethylene carbonate as the electrolyte solution 80, the element similarly exhibited the transmissive state after voltage application, and when a voltage of +2 V was applied after completion of the transparent state, the transmittance was decreased, causing the element to return to the reflective state.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 15

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml and 0.25 ml of polyethyleneimine (PEI, molecular weight 600) as a hydrogen ion conductive polymer, and diluting the polymer respectively in a mixed solution of 10 ml of γ-butyrolactone. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the reflective dimming layer 50 on the transparent base material 70. The initial state of this switching element was a mirror state.

A voltage of ±2 V was applied between the electrodes, and the changes in the optical transmittance and the optical reflectance at that time were measured with the measurement system combining the semiconductor laser having a wavelength of 670 nm and the silicon photodiode.

For example, the element produced using the non-water-based hydrogen ion conductive electrolyte solution 80 containing 0.1 ml of polyethyleneimine is such that since the magnesium-nickel-based alloy thin film as the reflective dimming layer 50 has metallic gloss, the thin film reflects light satisfactorily (optical reflectance: about 47%), and since the tungsten oxide thin film as the ion storage layer 30 is colored dark blue, the transmittance is very low (optical transmittance: about 0.3%). When a voltage of -2 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 17%, optical transmittance: about 31%). The changes over time in the optical transmittance and the optical reflectance at this time are presented in FIG. 23(a) and FIG. 23(b). As shown in FIG. 23(a) and FIG. 23(b), in the element which used a mixed solution of polyethyleneimine and γ-butyrolactone as the electrolyte solution 80, the element similarly exhibited the transmissive state after voltage application, and when a voltage of +2 V was applied after completion of the transparent state, the transmittance was decreased, causing the element to return to the reflective state.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 16

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, and diluting the polymer in 10 ml of 1,3-dioxolane. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 45%), and since the tungsten oxide thin film as the ion storage layer 30 is colored dark blue, the transmittance is very low (optical transmittance: about 0.3%). When a voltage of -2.5 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 19%, optical transmittance: about 27%). The changes over time in the optical transmittance and the optical reflectance at this time are presented in FIG. 24(a) and FIG. 24(b). As shown in FIG. 24(a) and FIG. 24(b), in the element which used a mixed solution of polyethyleneimine and 1,3-dioxolane as the electrolyte solution 80, the element similarly exhibited the transmissive state after voltage application, and when a voltage of +2.5 V was applied after completion of the transparent state, the transmittance was decreased, causing the element to return to the reflective state.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 17

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a transparent electrode layer 60: tin-doped indium oxide/a reflective dimming layer 50: a magnesium-nickel-based alloy/a catalyst layer 40: palladium was carried out on a transparent base material 70 formed from a glass substrate, using a magnetron sputtering method. The various film forming conditions are the same as in Example 1.

A non-water-based hydrogen ion conductive electrolyte solution 80 was prepared by measuring off 0.1 ml of polyethylene glycol (molecular weight 20,000) as an ion conductive polymer, diluting the polymer in 10 ml of tetrahydrofuran, dissolving the polymer, and then adding 0.25 g of polyvinyl butyral (PVB, degree of polymerization: 2400). The hydrogen ion index of the solution 80 thus prepared was 7. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70. Thus, a laminated structure was produced.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±3 V was applied between the electrodes, and the changes in the optical transmittance and the optical reflectance at that time were measured with the measurement system combining the semiconductor laser having a wavelength of 670 nm and the silicon photodiode.

The element immediately after production is such that since the magnesium-nickel-based alloy thin film as the reflective dimming layer 50 has metallic gloss, the thin film reflects light satisfactorily (optical reflectance: about 47%), and since the tungsten oxide thin film as the ion storage layer 30 is colored dark blue, the transmittance is very low (optical transmittance: about 0.2%).

When a voltage of -3 V was applied to this multilayer film, the hydrogen ions in the ion storage layer 30 formed from the tungsten oxide thin film diffused into a non-water-based hydrogen ion conductive electrolyte layer 90, and were introduced through the palladium catalyst layer 40 to the reflective dimming layer 50 formed from the magnesium-nickel-based alloy thin film.

The element using a mixed solution of polyethylene glycol, tetrahydrofuran and polyvinyl butyral as the electrolyte solution 80 undergoes a change in the optical transmittance of about 33% and a change in the optical reflectance of about 9% as a result of voltage application. When a voltage was applied after completion of the transparent state, the decrease in the transmittance and the increase in the reflectance were relatively slow.

### Example 18

By the same procedure as in Example 1, an ion storage layer 30: tungsten oxide was deposited on a transparent base material 10 formed from a glass substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a glass substrate, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in a mixed solution of 5 ml of tetrahydrofuran and 5 ml of toluene, dissolving the polymer, and adding 0.1 g of polyvinyl butyral (PVB, degree of polymerization 2400). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the reflective dimming layer 50 on the transparent base material 70. The initial state of this switching element was a mirror state.

A voltage of ±3 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 44%), and since the tungsten oxide thin film as the ion storage layer 30 is colored dark blue, the transmittance is very low (optical transmittance: about 0.3%). When a voltage of -3 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 9%, optical transmittance: about 32%). In the element which used a mixed solution of polyethyleneimine, tetrahydrofuran, toluene and polyvinyl butyral as the electrolyte solution 80, the element similarly exhibited the transmissive state after voltage application, and when a voltage of +3 V was applied after completion of the transparent state, the transmittance was decreased, causing the element to return to the reflective state.

### Example 19

By the same procedure as in Example 1, an ion storage layer 30: tungsten oxide was deposited on a transparent base material 10 formed from a polycarbonate substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from polycarbonate, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in 10 ml of 1-methyl-2-pyrrolidone, dissolving the polymer, and then adding 0.1 g of polyvinyl butyral (PVB, degree of polymerization: 630). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

FIG. 25(a) and FIG. 25(b) show the transmission spectra and the reflection spectra of the element before and after switching. The element thus produced is such that since the magnesium-nickel-based alloy thin film as the reflective dimming layer 50 has metallic gloss, the thin film reflects light satisfactorily (sunlight reflectance: about 46%), and since the tungsten oxide thin film as the ion storage layer 30 is colored dark blue, the transmittance is very low (sunlight transmittance: about 1 %). When a voltage of -3 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (sunlight reflectance: about 32%, sunlight transmittance: about 15%). The element similarly exhibited the transmissive state after voltage application, and when a voltage of +3 V was applied after completion of the transparent state, the transmittance was decreased, causing the element to return to the reflective state.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 20

By the same procedure as in Example 1, an ion storage layer 30: tungsten oxide was deposited on a transparent base material 10 formed from a polycarbonate substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from polycarbonate, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in 10 ml of γ-butyrolactone, dissolving the polymer, and then adding 0.1 g of polyvinyl butyral (PVB, degree of polymerization: 630). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

FIG. 26(a) and FIG. 26(b) show the transmission spectra and the reflection spectra of the element before and after switching. The element thus produced is such that since the magnesium-nickel-based alloy thin film as the reflective dimming layer 50 has metallic gloss, the thin film reflects light satisfactorily (sunlight reflectance: about 47%), and since the tungsten oxide thin film as the ion storage layer 30 is colored dark blue, the transmittance is very low (sunlight transmittance: about 0.9%). When a voltage of -3 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (sunlight reflectance: about 32%, sunlight transmittance: about 10%). The element similarly exhibited the transmissive state after voltage application, and when a voltage of +3 V was applied after completion of the transparent state, the transmittance was decreased, causing the element to return to the reflective state.

The present element can reversibly switch between a reflective state and a transmissive state by changing the polarity of the applied voltage. As such, it was confirmed that the element produced using the non-water-based hydrogen ion conductive electrolyte solution 80 exhibited excellent dimming characteristics.

### Example 21

An ion storage layer 30: tungsten oxide was deposited on a transparent base material 10 formed from a PET substrate coated with a conductive mesh electrode as a transparent electrode layer 20, and deposition of various thin films of a reflective dimming layer 50: a magnesium-nickel-based alloy/a catalyst layer 40: palladium was carried out on a transparent base material 70 formed from a PET substrate coated with a conductive mesh electrode as a transparent electrode layer 60, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in 10 ml of 1-methyl-2-pyrrolidone, dissolving the polymer, and then adding 0.1 g of polyvinyl butyral (PVB, degree of polymerization: 630). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on then evaluation apparatus as illustrated in FIG. 4 in the same manner as in Example 1, and the optical switching characteristics were investigated by connecting electrodes to the conductive mesh electrode on the transparent base material 10 and the conductive mesh electrode on the transparent base material 70. The initial state of this switching element was a mirror state.

A voltage of ±1 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 48%), and since the tungsten oxide thin film as the ion storage layer 30 is colored dark blue, the transmittance is very low (optical transmittance: about 0.6%). Changes over time in the optical transmittance and the optical reflectance at this time are presented in FIG. 27(a) and FIG. 27(b). When a voltage of -1 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 28%, optical transmittance: about 28%). As such, in the element which used a mixed solution of polyethyleneimine, 1-methyl-2-pyrrolidone and polyvinyl butyral as the electrolyte solution 80, the element similarly exhibited the transmissive state after voltage application, and when a voltage of +1 V was applied after completion of the transparent state, the transmittance was decreased, causing the element to return to the reflective state.

### Example 22

An ion storage layer 30: tungsten oxide was deposited on a transparent base material 10 formed from a PET substrate coated with a conductive mesh electrode as a transparent electrode layer 20, and deposition of various thin films of a reflective dimming layer 50: a magnesium-nickel-based alloy/a catalyst layer 40: palladium was carried out on a transparent base material 70 formed from a PET substrate coated with a conductive mesh electrode as a transparent electrode layer 60, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in 10 ml of γ-butyrolactone, dissolving the polymer, and then adding 0.1 g of polyvinyl butyral (PVB, degree of polymerization: 630). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the conductive mesh electrode on the transparent base material 10 and the conductive mesh electrode on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 40%), and since the tungsten oxide thin film as the ion storage layer 30 is colored dark blue, the transmittance is very low (optical transmittance: about 1.5%). Changes over time in the optical transmittance and the optical reflectance at this time are presented in FIG. 28(a) and FIG. 28(b). When a voltage of -2.5 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 22%, optical transmittance: about 24%). As such, in the element which used a mixed solution of polyethyleneimine, γ-butyrolactone and polyvinyl butyral as the electrolyte solution 80, the element similarly exhibited the transmissive state after voltage application, and when a voltage of +2.5 V was applied after completion of the transparent state, the transmittance was decreased, causing the element to return to the reflective state.

### Example 23

By the same procedure as in Example 1, an ion storage layer 30: tungsten oxide was deposited on a transparent base material 10 formed from a PEN substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a PEN substrate coated with a tin-doped indium oxide as a transparent electrode layer 60, using a magnetron sputtering method.

A non-water-based hydrogen ion conductive electrolyte solution 80 was prepared by measuring off 0.1 ml of polyethyleneimine (PEI, molecular weight 600) as a hydrogen ion conductive polymer, diluting the polymer in 10 ml of γ-butyrolactone, dissolving the polymer, and then adding 0.1 g of polyvinyl butyral (PVB, degree of polymerization: 630). The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the transparent electrode layer 60 on the transparent base material 70. The initial state of this switching element was a mirror state.

A voltage of ±2.5 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 45%), and since the tungsten oxide thin film as the ion storage layer 30 is colored dark blue, the transmittance is very low (optical transmittance: about 0.3%). Changes over time in the optical transmittance and the optical reflectance at this time are presented in FIG. 29(a) and FIG. 29(b). When a voltage of -2.5 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 14%, optical transmittance: about 36%). As such, in the element which used a mixed solution of polyethyleneimine, γ-butyrolactone and polyvinyl butyral as the electrolyte solution 80, the element similarly exhibited the transmissive state after voltage application, and when a voltage of +2.5 V was applied after completion of the transparent state, the transmittance was decreased, causing the element to return to the reflective state.

### Example 24

By the same procedure as in Example 1, an ion storage layer 30: tungsten oxide was deposited on a transparent base material 10 formed from a polycarbonate substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a polycarbonate substrate, using a magnetron sputtering method.

A non-water-based hydrogen ion conductive electrolyte solution 80 was prepared by measuring off 0.1 g of ammonium persulfate as a hydrogen ion conductive polymer, diluting the polymer in 10 ml of 1-methyl-2-pyrrolidone, dissolving the polymer, and then adding 0.1 g of triisopropanolamine. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the reflective dimming layer 50 on the transparent base material 70. The initial state of this switching element was a mirror state.

A voltage of ±3 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 43%), and since the tungsten oxide thin film as the ion storage layer 30 is colored dark blue, the transmittance is very low (optical transmittance: about 0.3%). Changes over time in the optical transmittance and the optical reflectance at this time are presented in FIG. 30(a) and FIG. 30(b). When a voltage of -3 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 10%, optical transmittance: about 34%). As such, in the element which used a mixed solution of ammonium sulfate, 1-methyl-2-pyrrolidone and triisopropanolamine as the electrolyte solution 80, the element similarly exhibited the transmissive state after voltage application, and when a voltage of +3 V was applied after completion of the transparent state, the transmittance was decreased, causing the element to return to the reflective state.

### Example 25

By the same procedure as in Example 1, an ion storage layer 30: tungsten oxide was deposited on a transparent base material 10 formed from a polycarbonate substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a polycarbonate substrate, using a magnetron sputtering method.

A non-water-based hydrogen ion conductive electrolyte solution 80 was prepared by measuring off 0.1 g of ammonium persulfate as a hydrogen ion conductive polymer, diluting the polymer in 10 ml of γ-butyrolactone, dissolving the polymer, and adding 0.1 g of triisopropanolamine. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70.

The element thus obtained was mounted on the evaluation apparatus as illustrated in FIG. 4 in the same manner as in Example 1, and the optical switching characteristics were investigated by connecting electrodes to the transparent electrode layer 20 on the transparent base material 10 and the reflective dimming layer 50 on the transparent base material 70. The initial state of this switching element was a mirror state.

A voltage of ±3 V was applied between the electrodes, and the changes in the optical transmittance and the optical reflectance at that time were measured with the measurement system combining the semiconductor laser having a wavelength of 670 nm and the silicon photodiode.

The element thus produced is such that since the magnesium-nickel-based alloy thin film as the reflective dimming layer 50 has metallic gloss, the thin film reflects light satisfactorily (optical reflectance: about 43%), and since the tungsten oxide thin film as the ion storage layer 30 is colored dark blue, the transmittance is very low (optical transmittance: about 0.3%). Changes over time in the optical transmittance and the optical reflectance at this time are presented in FIG. 31(a) and FIG. 31(b). When a voltage of -3 V was applied to this multilayer film, the hydrogen ions in the ion storage layer 30 formed from the tungsten oxide thin film diffused into an electrolyte layer 90, and were introduced through the palladium catalyst layer 40 to the reflective dimming layer 50 formed from the magnesium-nickel-based alloy thin film. As a result, the ion storage layer 30 formed from the tungsten oxide thin film became transparent, and the reflective dimming layer 50 formed from the magnesium-nickel-based alloy thin film also underwent hydrogenation and became transparent (optical reflectance: about 15%, optical transmittance: about 35%). As such, in the element which used a mixed solution of ammonium sulfate, γ-butyrolactone and triisopropanolamine as the electrolyte solution 80, the element similarly exhibited the transmissive state after voltage application, and when a voltage of +3 V was applied after completion of the transparent state, the transmittance was decreased, causing the element to return to the reflective state.

### Example 26

### (1) Element according to existing technology

An ion storage layer 30: tungsten oxide was deposited on a transparent base material 10 formed from a glass substrate coated with tin-doped indium oxide as a transparent electrode layer 20, and a solid electrolyte layer 90: tantalum oxide was formed thereon by a reactive DC magnetron sputtering method. For the film forming process, in a mixed atmosphere having the ratio of flow rates of argon gas and oxygen gas controlled to 7:1, the pressure inside the vacuum chamber was adjusted to 0.7 Pa, a power of 70 W was applied to a tantalum metal target, and sputtering was performed. The film thickness of the tantalum oxide thin film thus formed was about 200 nm. On the tantalum oxide thin film of the solid electrolyte layer 90, an aluminum thin film as a buffer layer was formed by a DC magnetron sputtering method. Argon gas was used as the atmosphere gas, the pressure inside the vacuum chamber was adjusted to 0.6 Pa, a power of 50 W was applied to an aluminum metal target, and sputtering was performed. The film thickness of the aluminum thin film thus formed was about 2 nm. A catalyst layer 40: palladium, and a reflective dimming layer 50: a magnesium-nickel alloy were formed on the aluminum thin film of the buffer layer.

In order to seal the magnesium-nickel alloy thin film of the reflective dimming layer 50 and other multilayer films, an ultraviolet radiation/heat dual curable epoxy resin (XNR5541 manufactured by Nagase ChemteX Corp.) was applied as a protective layer, and the epoxy resin was further covered with a glass plate. In order to cure the ultraviolet radiation/heat dual curable epoxy resin, the element was irradiated with ultraviolet radiation at a wavelength of 365 nm for 5 minutes at an ultraviolet radiation intensity of 170 mW/cm², using an ultraviolet curing apparatus. In order to stabilize the resin after irradiation, the element was maintained in a constant temperature chamber at 80°C for 30 minutes, and thus a laminated glass type element was produced. In this manner, an element based on an existing technology was produced by a known method of forming films sequentially on one sheet of glass substrate using a solid electrolyte as the electrolyte.

### (2) Element according to technology of present invention

On the other hand, by the same procedure as in Example 1, an ion storage layer 30: tungsten oxide was deposited on a transparent base material 10 formed from a glass substrate coated with tin-doped indium oxide as a transparent electrode layer 20, and deposition of various thin films of a reflective dimming layer 50: a magnesium-nickel-based alloy/a catalyst layer 40: palladium was carried out on a transparent base material 70 formed from a glass substrate, using a magnetron sputtering method.

As a non-water-based hydrogen ion conductive electrolyte solution 80, 0.1 g of polyethyleneimine (PEI, molecular weight 600) of an ion conductive polymer was measured off and diluted in 10 ml of tetrahydrofuran. After the polymer was dissolved, 0.05 g of 12-hydroxystearic acid was added thereto. The hydrogen ion index of the solution 80 thus prepared was 12. The solution 80 was applied on the ion storage layer 30 formed from the tungsten oxide thin film on the transparent base material 10, and subsequently, the transparent base material 70 was covered to cause the solution to adhere closely to the palladium catalyst layer 40 on the transparent base material 70. Thus, a laminated structure was produced.

### (3) Comparison of characteristics

Each of the elements thus obtained was mounted on the evaluation apparatus illustrated in FIG. 4 in the same manner as in Example 1, and the optical switching characteristics were investigated. The initial state of this switching element was a mirror state.

A voltage was applied between the electrodes, and the change in the optical transmittance at that time was measured with the measurement system combining the semiconductor laser having a wavelength of 670 nm and the silicon photodiode. The results are presented in FIG. 32.

The elements immediately after production all have very low transmittances (optical transmittance: about 0.2%). When a voltage of -5 V was applied to the element produced according to the existing technology, the hydrogen ions in the ion storage layer 30 formed from the tungsten oxide thin film diffused into the non-water-based hydrogen ion conductive electrolyte layer 90, and were introduced through the palladium catalyst layer 40 to the reflective dimming layer 50 formed from a magnesium-nickel-based alloy thin film. At this time, the element switched to the transparent state in approximately 2 minutes, and exhibited an optical transmittance of about 44%.

On the other hand, when a voltage of -1 V was similarly applied to the element produced by the technology of the present invention, the hydrogen ions in the ion storage layer 30 formed from the tungsten oxide thin film diffused into the non-water-based hydrogen ion conductive electrolyte layer 90, and were introduced through the palladium catalyst layer 40 to the reflective dimming layer 50 formed from the magnesium-nickel-based alloy thin film. At this time, the element switched to the transparent state in approximately 90 seconds, and exhibited an optical transmittance of about 42%.

As such, when the non-water-based hydrogen ion conductive electrolyte solution 80 according to the technology of the present invention was used, low-voltage (low-power) driving of the element was enabled.

### INDUSTRIAL APPLICABILITY

The reflective dimming electrochromic element of the present invention can change the transmittance and reflectance in the visible region as well as in the infrared region by switching. Therefore, when used as a dimming window material, the element can effectively control the inflow of heat caused by sunlight to the interior and the outflow of heat of the interior to the outdoors, by switching.

Furthermore, the reflective dimming electrochromic element can also be applied to various electronic and optical devices utilizing the relevant performance. According to the technology of the present invention, when particularly a non-water-based hydrogen ion conductive electrolyte solution containing an additive that exhibits dispersibility and adhesiveness is used, an element can be produced by conveniently laminating two sheets of base materials with the electrolyte solution having adhesiveness. Therefore, the element is advantageous in view of size extension, productivity and cost, and low-voltage driving is enabled by the characteristics of the solution.

### REFERENCE NUMERALS LIST

- 10: Transparent base material
- 20: Transparent electrode layer
- 30: Ion storage layer
- 40: Catalyst layer
- 50: Reflective dimming layer
- 60: Transparent electrode layer
- 70: Transparent base material
- 80: Non-water-based hydrogen ion conductive electrolyte solution
- 90: Non-water-based hydrogen ion conductive electrolyte layer
- 100: Intermediate film for glass
- 110: Glass plate
- 501: Reflective dimming electrochromic element
- 502: Semiconductor laser (A = 670 nm)
- 503: Si photodiode
- 504: Digital multimeter
- 505: Digital multimeter
- 506: SourceMeter
- 507: Computer

## Claims

1. A reflective dimming electrochromic element having a multilayer film formed on a transparent base material, the element having a multilayer integrated structure comprising at least a transparent base material having a transparent electrode layer and an ion storage layer sequentially formed thereon; a transparent base material having a transparent electrode layer, a reflective dimming layer and a catalyst layer, or a reflective dimming layer and a catalyst layer, sequentially formed thereon; and a non-water-based hydrogen ion conductive electrolyte layer interposed between the ion storage layer and the catalyst layer.

2. The reflective dimming electrochromic element according to claim 1, wherein the non-water-based hydrogen ion conductive electrolyte layer is formed from a non-water-based hydrogen ion conductive electrolyte solution, and the hydrogen ion concentration index (pH) of the electrolyte solution is adjusted to be higher than 7.

3. The reflective dimming electrochromic element according to claim 1 or 2, wherein the non-water-based hydrogen ion conductive electrolyte layer is formed from a non-water-based hydrogen ion conductive electrolyte solution, and the electrolyte solution comprises an ion conductive polymer and an organic solvent, or an ion conductive polymer, an organic solvent and an additive exhibiting dispersibility and adhesiveness.

4. The reflective dimming electrochromic element according to claim 3, wherein the ion conductive polymer comprises any one or more of polyethyleneimine, polyacrylic acid, polyethylene glycol, polypropylene glycol, tetrabutylammonium perchlorate, tetrabutylammonium borofluoride, ammonium persulfate, and a perfluorosulfonic acid-based resin ammonium persulfate.

5. The reflective type dimming electrochromic element according to claim 3, wherein the organic solvent comprises any one or more of tetrahydrofuran, propylene carbonate, ethylene carbonate, diethyl carbonate, dimethyl carbonate, ethanol, acetone, propanol, γ-butyrolactone, 1-methyl-2-pyrrolidone, 1,3-dioxolane, toluene, cyclohexane, 1-methoxy-2-propanol, tetrahydrofurfuryl alcohol, 2-methoxymethanol, and α-terpineol.

6. The reflective dimming electrochromic element according to claim 3, wherein the additive comprises any one or more of polyvinyl butyral, polyvinylpyrrolidone, polytetrafluoroethylene, polyvinylidene fluoride, polymethyl methacrylate, polyvinyl chloride, polyethylene, 12-hydroxystearic acid, lauroylglutamic acid dibutylamide, dibenzylidene sorbitol, polysilane, an ethylene-vinyl acetate copolymer resin, ethyl cellulose, and triisopropanolamine.

7. The reflective dimming electrochromic element according to claim 1, wherein the transparent electrode layer includes at least one of a metal, an oxide or an organic compound.

8. The reflective dimming electrochromic element according to claim 1, wherein the transparent base material is glass or a resin sheet.

9. The reflective dimming electrochromic element according to claim 1, wherein the ion storage layer formed on the transparent electrode layer comprises a transition metal oxide.

10. The reflective dimming electrochromic element according to claim 1, wherein the reflective dimming layer comprises magnesium, or an alloy obtained by adding any one or more of nickel, titanium, niobium, zirconium, calcium and strontium to magnesium.

11. The reflective dimming electrochromic element according to claim 1, wherein the catalyst layer formed on the reflective dimming layer includes palladium, platinum, silver, or an alloy thereof.

12. The reflective dimming electrochromic element according to claim 1, wherein any one of the ion storage layer and the reflective dimming layer is hydrogenated, and/or hydrogen ions are incorporated into at least the non-water-based hydrogen ion conductive electrolyte layer.

13. A method for producing a reflective dimming electrochromic element having a multilayer film formed on a transparent base material, the method comprising at least forming a transparent electrode layer and an ion storage layer on a first transparent base material; forming a transparent electrode layer, a reflective dimming layer and a catalyst layer, or a reflective dimming layer and a catalyst layer on a second transparent base material; and interposing a non-water-based hydrogen ion conductive electrolyte layer between the ion storage layer and the catalyst layer, to subject the element to multilayer integration.

14. A dimming member comprising the reflective dimming electrochromic element according to any one of claims 1 to 12 incorporated therein.
